# EUROPÄISCHE PATENTSCHRIFT

(11) **EP 3 690 354 B1**
(45) Veröffentlichungstag und Bekanntmachung des Hinweises auf die Patenterteilung: **10.09.2025**
(21) Anmeldenummer: 20154223.0
(22) Anmeldetag: 29.01.2020
(51) Int. Cl.: F25B 17/08, B60H 1/00, F25B 17/12, F28D 20/00

(54) **VERFAHREN ZUM BETREIBEN EINER THERMOREGULIERUNGSANORDNUNG UND THERMOREGULIERUNGSANORDNUNG**
METHOD FOR OPERATING A THERMOREGULATING DEVICE AND THERMOREGULATING ASSEMBLY
PROCÉDÉ DE FONCTIONNEMENT D'UN AGENCEMENT DE RÉGULATION THERMIQUE ET AGENCEMENT DE RÉGULATION THERMIQUE

(30) Priorität: 30.01.2019 DE 102019102273
(43) Veröffentlichungstag der Anmeldung: 05.08.2020
(73) Patentinhaber: Deutsches Zentrum für Luft- und Raumfahrt e.V., 53227 Bonn (DE)
(72) Erfinder: WECKERLE, Christoph, 73326 Deggingen (DE); BÜRGER, Inga, 70563 Stuttgart (DE); LINDER, Marc Philipp, 70199 Stuttgart (DE); HEGNER, Robert, 70771 Leinfelden-Echterdingen (DE); DITTUS, Holger, 75397 Simmozheim (DE)
(74) Vertreter: Fleck, Julia Maria

(56) Entgegenhaltungen:
- DE-A1- 102014 215 891
- DE-B3- 102014 109 580
- JP-A- 2004 333 027
- JP-A- 2016 011 244

## Beschreibung

Die Erfindung betrifft ein Verfahren zum Betreiben einer Thermoregulierungsanordnung zur Temperierung (bzw. Temperaturregulierung) eines mit der Thermoregulierungsanordnung in thermischem Kontakt stehenden Systems, das insbesondere innerhalb eines Fahrzeugs angeordnet ist, bei dem in einem Reaktionsgassystem Reaktionsgas von einer Reaktionsgasquelle unter Zwischenschaltung einer Temperieranordnung in eine Reaktionsgassenke geleitet wird, wobei in der in dem Reaktionsgassystem angeordneten Temperieranordnung in einem Absorptionsbetrieb Wärme und/oder in einem Desorptionsbetrieb Kälte erzeugt wird, wobei in dem Absorptionsbetrieb in einer ersten und/oder einer zweiten Reaktorvorrichtung Reaktionsgas von Reaktionsmaterial unter Wärmeabgabe absorbiert wird und in dem Desorptionsbetrieb in der zweiten und/oder der ersten Reaktorvorrichtung Reaktionsgas von dem Reaktionsmaterial unter Wärmeaufnahme desorbiert wird, und wobei ein Wärmeträgermedium, insbesondere ein Teilstrom des Wärmeträgermediums, innerhalb eines Wärmetransportsystems, insbesondere mittels einer Ventilanordnung, durch die erste und/oder die zweite Reaktorvorrichtung geleitet wird, wobei es zur Aufnahme der erzeugten Wärme oder Kälte in thermischen Kontakt mit dem ersten und/oder dem zweiten Reaktionsmaterial gebracht wird. Die Erfindung betrifft ferner eine Thermoregulierungsanordnung sowie ein Fahrzeug.

Im Rahmen der Elektromobilität stellt die Fahrzeuginnenraumklimatisierung eine erhebliche Herausforderung dar. Zum einen wird durch den Einsatz konventionell elektrisch betriebener Klimaanlagen die Reichweite des Fahrzeugs um etwa 35 % bis 50 % reduziert. Zum anderen erfordern derartige Klimaanlagen den Einsatz unterschiedlicher und teilweise giftiger Kältemittel. Daher besteht Bedarf an alternativen Klimatisierungstechnologien, die gegebenenfalls auch in konventionellen Verbrennungsmotoren einsetzbar sind.

Einen vielversprechenden Ansatz stellt die Verwendung thermochemischer Gas-Feststoff-Reaktionssysteme (kurz "Reaktionssysteme") dar, wobei ein Reaktionsgas in einer exothermen, d. h. Wärme freisetzenden Reaktion reversibel an einen Feststoff als Reaktionsmaterial gebunden wird (Absorption). In der endothermen Rückreaktion unter Freisetzung des Reaktionsgases (Desorption) und Wärmeaufnahme aus der Umgebung ist Kälte erzeugbar. Als Materialpaarungen des Reaktionssystems sind beispielsweise Wasserstoff als Reaktionsgas und ein Metall als Feststoff geeignet, wobei in beladenem Zustand ein Metallhydrid entsteht. Der Antrieb dieser Systeme erfolgt bei den sogenannten geschlossenen Systemen durch eine Wärmequelle und bei den sogenannten offenen Systemen durch eine Druckdifferenz in der Reaktionsgas-Versorgung.

In der JP 2004 333027 A ist ein Verfahren zum Betreiben einer Thermoregulierungsanordnung gemäß dem Oberbegriff von Anspruch 1; und eine Thermoregulierungsanordnung gemäß dem Oberbegriff von Anspruch 6 zur Temperierung eines mit ihr in thermischem Kontakt stehenden Systems, insbesondere innerhalb eines Fahrzeugs, offenbart, wobei das Brennstoffzellenfahrzeug mit einer Brennstoffzelle und einem Wasserstoff-Hochdrucktank ausgerüstet ist. Mittels eines Bypasspfads werden zwei mit einem Wasserstoffversorgungspfad in Strömungsverbindung stehende Container mit Wasserstoff versorgt, die jeweils mit einer Wasserstoffspeicherlegierung zur Speicherung und Abgabe von Wasserstoff gefüllt sind. Die beiden Container erzeugen im Wechselbetrieb zueinander Wärme und Kälte.

Ein Verfahren und eine Thermoregulierungsanordnung sind auch aus der DE 10 2014 109 580 B3 bekannt. Hierbei wird ein geschlossenes System innerhalb der Thermoregulierungsanordnung verwendet.

In der Veröffentlichung "Linder M, Kulenovic R, An energy-efficient air-conditioning system for hydrogen driven cars, Int. J Hydrogen Energy 2011, 36: 3215-3221" ist ein Versuchsaufbau mit Untersuchungen zu einer Klimaanlage zur Kälteerzeugung zum Einsatz in einem offenen System angegeben.

Der Erfindung liegt die Aufgabe zugrunde, ein Verfahren zum Betreiben einer Thermoregulierungsanordnung bereitzustellen, das flexible Betriebsweisen der Thermoregulierungsanordnung erlaubt, sowie eine flexibel betreibbare Thermoregulierungsanordnung und ein Fahrzeug, welches dieselbe aufweist.

Die Aufgabe wird für das Verfahren mit den Merkmalen des Anspruchs 1 und für die Thermoregulierungsanordnung mit den Merkmalen des Anspruchs 8 gelöst.

Bei dem Verfahren ist vorgesehen, dass in dem Absorptionsbetrieb und in dem Desorptionsbetrieb jeweils ein unterschiedlicher Betriebsdruck in den Reaktorvorrichtungen eingestellt wird und dass der jeweilige Betriebsdruck in den Reaktorvorrichtungen und/oder die Reaktionsgas-Massenströme zu bzw. von den Reaktorvorrichtungen in Abhängigkeit von Randbedingungen, insbesondere einer erforderlichen Temperatur des Wärmeträgermediums und/oder einer erforderlichen thermischen Leistung, eingestellt (d. h. mittels einer Steuereinrichtung gesteuert bzw. geregelt) wird/werden.

Der Betriebsdruck ist derjenige Druck, der während des Absorptions- bzw. Desorptions-)Betriebs in einer jeweiligen Reaktorvorrichtung vorliegt bzw. an der Reaktorvorrichtung anliegt und sich im Laufe des Absorptions- bzw. Desorptionsbetriebs einstellt. Beispielsweise kann in dem Desorptionsbetrieb der Druck von einem Niveau zu Beginn, von z. B. 35 bar, absinken auf das Niveau des anliegenden Betriebsdrucks, z. B. einem Versorgungsdruck einer angeschlossenen Reaktionsgassenke von z. B. 5 bar. Vorzugsweise ist der Betriebsdruck im Absorptionsbetrieb, mit beispielsweise zwischen 20 bar und 80 bar, höher als im Desorptionsbetrieb, mit beispielsweise zwischen 5 bar und 20 bar. Vorzugsweise sind zur Einstellung entsprechende Druck- und/oder Durchflussregulierungsmittel in den Leitungsmitteln für das Reaktionsgas vorhanden. Zwischen der Reaktionsgasquelle und der Reaktionsgassenke liegt vorzugsweise eine Druckdifferenz (von z. B. zwischen 20 bar und 40 bar) vor. Dabei beträgt für einen vorteilhaften Betrieb das Druckverhältnis des Betriebsdrucks im Absorptionsbetrieb zu dem Betriebsdruck im Desorptionsbetrieb zwischen 5 und 10, z. B. 7. Der jeweilige Betriebsdruck einer jeweiligen Reaktoranordnung liegt sowohl im Absorptionsbetrieb als auch im Desorptionsbetrieb zwischen dem Druck in der Reaktionsgasquelle, z. B. der Speichereinrichtung, als maximalem Druck und dem Druck an der Reaktionsgassenke, z. B. Arbeitsdruck der Energiewandeleinrichtung, als minimalem Druck. Durch die erfindungsgemäße Verfahrensführung wird die Thermoregulierungsanordnung über die Druckdifferenz des Betriebsdrucks während der Absorption und der Desorption angetrieben. Dabei kann vorteilhaft eine ohnehin vorhandene Druckdifferenz zwischen der Speichereinrichtung und der Energiewandeleinrichtung, beispielsweise einer Brennstoffzelle in einem Brennstoffzellenfahrzeug, als Triebkraft genutzt werden, was die Effizienz der Thermoregulierungsanordnung bzw. des Gesamtsystems, z. B. des Fahrzeuges, verbessert. Vorzugsweise wird dabei sowohl die im Desorptionsbetrieb erzeugte Kälte als auch die in dem Absorptionsbetrieb erzeugte Wärme genutzt und jeweils einem zu kühlenden bzw. einem zu beheizenden System (oder jeweils mehreren Systemen) zugeführt. Die Reaktionsgassenke in Form einer Energiewandeleinrichtung umfasst insbesondere eine Brennstoffzellenanordnung und/oder eine Verbrennungsanordnung (beispielsweise für eine katalytische Verbrennung).

Bei dem Verfahren wird ein Teil der thermischen Leistung, d.h. der "Wärme- und/oder Kälteleistung", hier vorzugsweise der benötigten Kälteleistung, zur Temperaturänderung, insbesondere zur Abkühlung, des Wärmeträgermediums durch eine weitere Temperieranordnung, insbesondere einer Kompressionskälteanordnung erbracht. Die zumindest eine weitere Temperieranordnung in Ausbildung einer Kompressionskälteanordnung ist neben der Temperieranordnung vorhanden und vorzugsweise strömungsmechanisch in Reihe, insbesondere stromab, zu der Temperieranordnung angeordnet. Die weitere Temperieranordnung ist zumindest teilweise von der Reaktionsgassenke, insbesondere unter Zwischenschaltung einer elektrischen Energiespeichereinrichtung, mit elektrischer Energie versorgbar bzw. versorgt. Die Kompressionskälteanordnung nutzt die Verdampfungswärme bei Wechseln des Aggregatszustandes eines Kältemittels zur Kälteerzeugung. Diese Maßnahme trägt zur Effizienzsteigerung der Thermoregulierungsanordnung bei, insbesondere wenn Systeme mit einem hohen Kältebedarf mit der Temperieranordnung in thermischem Kontakt stehen (beispielsweise eine Kühlumgebung bei einem Kühlfahrzeug).

Dabei wird eine besonders hohe Wirkungsgradsteigerung der Thermoregulierungsanordnung erfindungsgemäß dadurch erreicht, dass das Wärmeträgermedium zunächst durch die Temperieranordnung und anschließend durch die, in Reihe angeordnete, weitere Temperieranordnung geleitet wird, wobei eine größere Temperaturdifferenz des Wärmeträgermediums, zwischen 50 % und 100 %, vorzugsweise zwischen 60 % und 80 %, durch die weitere Temperieranordnung erbracht wird. Vorzugsweise wird dabei das Wärmeträgermedium abgekühlt. Dabei können die Wirkungsgrade beider Temperieranordnungen im Vergleich zu ihrer Einzelanordnung erhöht werden. So wird zunächst eine Temperaturdifferenz durch die Temperieranordnung in dem Wärmeträgermedium von einer Temperatur T1 auf eine Temperatur T2 erbracht und anschließend eine weitere Temperaturdifferenz von der Temperatur T2 auf eine Temperatur T3 durch die weitere Temperieranordnung. Die gesamte Temperaturdifferenz beträgt T1-T3. Eine signifikante Wirkungsgradsteigerung ergibt sich beispielsweise bei einer zu leistenden Gesamttemperaturdifferenz von 40 K (Abkühlung), wobei 10 K durch die Temperieranordnung und 30 K durch weitere Temperieranordnung erbracht wurden.

So lassen sich vorteilhaft unterschiedliche Thermoregulierungsaufgaben präzise bedienen. Die erforderliche thermische Leistung oder Temperatur des Wärmeträgermediums lassen sich insbesondere unter Berücksichtigung des jeweiligen zu temperierenden Systems und dessen einzustellender Zieltemperatur bzw. einzustellendem Zieltemperaturbereich, und anderen Randbedingungen, z. B. der Umgebungstemperatur, ermitteln. Zu temperierende Systeme können beispielsweise eine Batterieanordnung, eine Brennstoffzellenanordnung, Leistungselektronik des Fahrzeuges, die Umgebungsluft als Zuluft in den oder die Abluft aus dem Fahrzeuginnenraum und/oder ein (weiteres vorhandenes) Kühlsystem, z. B. eine Öl- und/oder Kühlwasserkühlung des Fahrzeugs darstellen. Ein zu temperierendes System z. B. kann je nach Randbedingungen, z. B. der Umgebungstemperatur, ein zu beheizendes System oder ein zu kühlendes System sein, d.h. als Wärmesenke oder als Wärmequelle dienen. So kann beispielsweise im Sommer die Zuluft zu dem Fahrzeuginnenraum als Wärmequelle dienen und (mittels Wärmeträgermedium und z. B. einem Wärmetauscher) zu kühlen sein, während sie im Winter als Wärmesenke dient und zu beheizen ist. Weiterhin ist bei der Einstellung des Betriebsdrucks und/oder des Reaktionsgas-Massenstroms das eingesetzte Gas-Feststoff-Reaktionssystem zu berücksichtigen, sowie weitere Randbedingungen, z. B. Charakteristiken (Wirkungsgrad etc.) der eingesetzten Reaktorvorrichtungen.

Das Wärmeträgermedium kann durch eine Flüssigkeit gebildet sein. Optional kann dies ein Kältemittel sein, welches innerhalb des Wärmetransportsystems einen Phasenübergang vollzieht. Denkbar wäre auch ein Gas, insbesondere Luft, als Wärmeträgermedium, wobei das Wärmetransportsystem entsprechend zur Luftleitung, z. B. mit Einlass- und Auslassklappen, ausgebildet ist und die Leitungsmittel beispielsweise Leitschaufeln und -wände umfassen. Die Reaktorvorrichtungen umfassen in diesem Falle bevorzugt vergleichsweise große Wärmetauscherflächen, z. B. in Form einer Rippenstruktur.

Eine zumindest teilweise Entkopplung der Leistungseinstellbarkeiten der Temperieranordnung und der Reaktionsgassenke, insbesondere in Ausbildung einer Energiewandeleinrichtung, ist erreichbar, wenn die Temperieranordnung zumindest zeitweise zumindest von einem Teilstrom des Reaktionsgases über einen Bypassabschnitt umströmt wird, wobei das Reaktionsgas unmittelbar (d. h. ohne Durchströmen einer Reaktorvorrichtung) von der Reaktionsgasquelle zu der Reaktionsgassenke bzw. Energiewandeleinrichtung strömt. Der Teilstrom an Reaktionsgas kann so z. B. zusätzlich zu oder anstelle der Versorgung der im Absorptionsbetrieb befindlichen Reaktorvorrichtung/en unmittelbar zu der Reaktionsgassenke strömen. So kann der Energiewandeleinrichtung beispielsweise zusätzliches Reaktionsgas (zusätzlich zu dem, welches aus der im Desorptionsbetrieb befindlichen Reaktorvorrichtung zu der Energiewandeleinrichtung strömt) zugeführt werden. So ist eine erhöhte Betriebsflexibilität (z. B. mit erhöhten Leistungsabgaben) der Energiewandeleinrichtung unabhängig von der Temperieranordnung erreichbar. Dies erlaubt eine optimierte Auslegbarkeit und einen optimierten Betrieb der Energiewandeleinrichtung, Temperieranordnung und/oder des Gesamtsystems (des Fahrzeuges).

Vorzugsweise werden die in dem Absorptionsbetrieb betriebene/n Reaktorvorrichtung/en von einem in einem ersten Teilkreislauf geführten, wärmeaufnehmenden Teilstrom des Wärmeträgermediums durchströmt. Weiterhin werden vorzugsweise die in dem Desorptionsbetrieb betriebene/n Reaktorvorrichtung/en von einem in einem zweiten Teilkreislauf geführten, kälteaufnehmenden (d.h. wärmeabgebenden) Teilstrom des Wärmeträgermediums durchströmt. Die Zuordnung der Teilkreisläufe zu den Reaktorvorrichtungen wird vorzugsweise mit einer Umschaltung von dem Absorptions- auf den Desorptionsbetrieb bzw. umgekehrt in einem Umschaltvorgang der Strömungsverbindungen mittels einer Ventilanordnung umgeschaltet. Diese Anordnung erlaubt eine insbesondere kontinuierliche Wärme- und Kältezufuhr in zu temperierende bzw. thermisch zu regulierende Systeme. Vorzugsweise ist an jedem Teilkreislauf zumindest ein, oder mehrere, zu temperierende/s System/e angeschlossen. Dies erlaubt eine optimierte Ausnutzung der Temperieranordnung unter Nutzung der erzeugten Wärme und Kälte.

Vorzugsweise wird die Thermoregulierungsanordnung zyklisch betrieben. Dabei wird in einem Halbzyklus eine der Reaktorvorrichtungen im Absorptionsbetrieb betrieben, wobei Reaktionsgas aus der Reaktionsgasquelle zur Absorption in die jeweilige Reaktorvorrichtung geleitet wird und die abgegebene Wärme von dem Wärmeträgermedium aufgenommen wird. Die jeweils andere Reaktorvorrichtung wird im Desorptionsbetrieb betrieben, wobei Reaktionsgas aus der Reaktorvorrichtung in die Reaktionsgassenke geleitet wird, wobei Wärme aus dem Wärmeträgermedium aufgenommen und so das Wärmeträgermedium abgekühlt wird. Nach einer Halbzykluszeit werden in einem Umschaltvorgang die Strömungsverbindungen des Reaktionsgases und/oder des Wärmeträgermediums (insbesondere dessen Teilkreisläufe) umgeschaltet und anschließend in dem anderen Halbzyklus die jeweils anderen Reaktorvorrichtungen im Absorptionsbetrieb und im Desorptionsbetrieb betrieben. Die Dauer eines Halbzyklus beträgt beispielsweise zwischen 30s und 300s, vorzugsweise zwischen 60s und 180s. Auf diese Weise wird ein kontinuierlicher Betrieb ermöglicht, mit Bereitstellung kontinuierlicher Wärme und/oder Kälte (Betriebsmodi "kontinuierliche Wärmeerzeugung" und/oder "kontinuierliche Kälteerzeugung"). Dabei wird vorzugsweise jeweils der kälteaufnehmende Teilstrom an die desorbierende Reaktorvorrichtung und der wärmeaufnehmende Teilstrom an die absorbierende Reaktorvorrichtung angeschlossen. Die mittels der Temperieranordnung erzeugte Wärme und/oder Kälte kann jeweils eine vorhandene konventionelle Klimaanlage und/oder Heizung unterstützen bzw. ersetzen. Die kontinuierlichen Betriebsmodi sind sowohl bei Betrieb des Fahrzeugs (während der Fahrt) als auch während der Standzeit möglich, wobei jeweils die Energiewandeleinrichtung betrieben wird. Während der Fahrt kann die durch die Energiewandeleinrichtung bereitgestellte Energie insbesondere dem Antriebssystem, sonstiger Leistungselektronik und/oder sonstigen Hilfsaggregaten zugeführt und/oder in einer elektrischen Speichereinrichtung bzw. Batterieanordnung zwischengespeichert werden. Während der Standzeit kann bereitgestellte Energie beispielsweise in der elektrischen Speichereinrichtung (Batterieanordnung) zwischengespeichert werden und/oder anderen Systemen, beispielsweise einer zusätzlichen elektrischen (Stand-) Heizung oder Klimaanlage und/oder sonstiger Leistungselektronik zur Verfügung gestellt werden.

Vorzugsweise wird der Umschaltvorgang in Abhängigkeit von Betriebsgrößen, insbesondere eines Drucks und/oder einer Temperatur, eingeleitet, insbesondere durch die Steuereinrichtung. So kann eine Umschaltung beispielsweise erfolgen, wenn innerhalb der Leitungsmittel zwischen der desorbierenden Reaktorvorrichtung und der Reaktionsgassenke ein Versorgungsdruck der Reaktionsgassenke erreicht bzw. unterschritten wird und/oder ein bestimmter Temperaturgradient innerhalb der Reaktorvorrichtung und/oder innerhalb des Wärmeträgermediums nicht mehr erreicht wird. Die Ermittlung der Betriebsgrößen erfolgt vorzugsweise über zumindest ein vorhandenes Sensorelement, beispielsweise ein oder mehrere Druck- und/oder Temperatursensorelement/e. Das oder die Sensorelement/e können beispielsweise in Leitungsmitteln des Reaktionsgassystems, insbesondere stromab der desorbierenden Reaktorvorrichtung (z. B. am Eintritt der Reaktionsgassenke), und/oder in Leitungsmitteln des Wärmetransportsystems (z. B. zur Temperaturmessung des Wärmeträgermediums) und/oder innerhalb der Reaktorvorrichtung/en angeordnet sein. Auf diese Weise kann die Thermoregulierungsanordnung effizient betrieben werden.

In einem weiteren bevorzugten Betrieb bzw. weiteren Betriebsmodi können die Reaktorvorrichtungen in einem "verstärkten" Betrieb parallel betrieben werden. Für eine "verstärkte" Wärmeerzeugung sind zunächst beide Reaktorvorrichtungen, vorzugsweise vollständig, von Reaktionsgas entladen, wobei anschließend Reaktionsgas parallel aus der Speichervorrichtung in beide Reaktorvorrichtungen geleitet wird, die im Absorptionsbetrieb betrieben werden und Wärme an das Wärmeträgermedium abgeben (z. B. bis zur vollständigen Beladung der Reaktorvorrichtungen). Alternativ sind für eine "verstärkte" Kälteerzeugung zunächst beide Reaktorvorrichtungen vorzugsweise vollständig, mit Reaktionsgas beladen. Anschließend wird Reaktionsgas parallel aus beiden Reaktorvorrichtungen, die im Desorptionsbetrieb betrieben werden und Kälte an das Wärmeträgermedium abgeben, in die Reaktionsgassenke geleitet. Während einer gegebenenfalls anschließenden Beladung der Reaktorvorrichtungen kann die Reaktionsgassenke z. B. über den Bypassabschnitt weiter mit Reaktionsgas versorgt werden. Vorzugsweise werden bei der "verstärkten" Wärmeerzeugung beide Reaktorvorrichtungen von dem wärmeaufnehmenden Teilstrom und bei der "verstärkten" Kälteerzeugung beide Reaktorvorrichtungen von dem kälteaufnehmenden Teilstrom des Wärmeträgermediums durchströmt. Durch die Ventilanordnung des Wärmetransportsystems sind die Strömungsverbindungen entsprechend eingestellt. Diese Betriebsmodi sind ebenfalls im Fahrzeugbetrieb oder im Stand betreibbar. So kann im Stand z. B. der Fahrzeuginnenraum vorgekühlt oder vorgeheizt werden. Die Auslegungsgröße der Reaktorvorrichtungen definiert die zur Verfügung stehende Wärme bzw. Kälte. Eine konventionelle Heiz- bzw. Kühlvorrichtung kann ersetzt oder in ihrer Auslegungsgröße verringert werden. Bei niedrigen Umgebungstemperaturen kann beispielsweise auch eine Brennstoffzelle auf Betriebstemperatur gebracht werden. Die durch die Energiewandeleinrichtung bereitgestellte Energie ist z. B. analog wie zu dem "kontinuierlichen Betrieb" angegeben verwendbar.

Eine effizientere Verfahrensführung ergibt sich, wenn bei dem Umschaltvorgang einzelne, in dem Wärmetransportsystem vorhandene Ventilmittel der Ventilanordnung zumindest teilweise mit einer Umschaltzeit versetzt zueinander umgeschaltet werden.

Dabei werden vorzugsweise bei dem Umschaltvorgang zum Umschalten der Strömungsverbindungen des ersten Teilkreislaufes mit der ersten Reaktorvorrichtung auf die zweite Reaktorvorrichtung und des zweiten Teilkreislaufs von der zweiten Reaktorvorrichtung auf die erste Reaktorvorrichtung zunächst die Ventilmittel stromauf der Reaktorvorrichtungen umgeschaltet und nach der Umschaltzeit die Ventilmittel stromab der Reaktorvorrichtungen umgeschaltet. So werden zunächst die Strömungsverbindungen des Wärmeträgermediums in die Reaktorvorrichtungen auf die jeweils andere Reaktorvorrichtung umgeschaltet und nach dem Zeitversatz die Strömungsverbindungen aus den Reaktorvorrichtungen. Die Umschaltzeit entspricht insbesondere in etwa der Durchströmzeit des Wärmeträgermediums ausgehend von den stromauf angeordneten Ventilmitteln bis zu den stromab angeordneten Ventilmitteln. So ist der Zeitversatz unter Kenntnis des Massen- bzw. Volumenstroms und des durchströmten Volumens zwischen den jeweiligen Ventilmittel ermittelbar. Dementsprechend kann, je nach Volumen der Reaktorvorrichtung (seitens des Wärmeträgermediums) und/oder gegebenenfalls dem Gesamtvolumen zwischen den Kopplungsstellen, und Durchflussgeschwindigkeit des Wärmeträgermediums, die Umschaltzeit bestimmt und in eine Steuerung durch eine Steuereinrichtung der Thermoregulierungsanordnung implementiert werden. Die Umschaltzeit kann mehrere Sekunden, beispielsweise zwischen 5s und 30s betragen. Durch diese Maßnahme kann jeweils ein Restvolumen an Wärmeträgermedium, welches sich zwischen den stromauf angeordneten Ventilmitteln und den stromab angeordneten Ventilmitteln befindet, in den entsprechenden Teilkreislauf abströmen. Erst nach dem Abströmen werden auch die stromab angeordneten Ventilmittel auf den anderen Teilkreislauf (oder umgekehrt) umgeschaltet. Dadurch wird verhindert, dass ein Restvolumenstrom an kaltem bzw. warmem Wärmeträgermedium in jeweils den anderen Teilkreislauf, d. h. den warmen bzw. kalten Teilkreislauf (oder umgekehrt) einströmt.

Die Effizienz kann weiter gesteigert werden, wenn während der Umschaltzeit die Strömungsverbindung des Reaktionsgases von oder zu zumindest einer der Reaktorvorrichtungen unterbrochen wird, insbesondere mittels der Ventilanordnung innerhalb des Reaktionsgas Systems. Die Reaktionsgassenke kann dabei, falls erforderlich, über den Bypassabschnitt mit Reaktionsgas versorgt werden. Somit kann verhindert werden, dass in einen bereits umgeschalteten Teilkreislauf nachströmendes warmes bzw. kaltes Wärmeträgermedium unerwünschter Weise mit Kälte bzw. Wärme innerhalb der jeweiligen Reaktorvorrichtung beaufschlagt wird.

Die Aufgabe betreffend die Thermoregulierungsanordnung wird mit den Merkmalen des Anspruchs 6 gelöst. Bevorzugte Ausbildungsvariante sind in Zusammenhang mit den darauf bezogenen abhängigen Ansprüchen, und auch in Zusammenhang mit den Ausführungsvarianten des Verfahrens gemäß den Ansprüchen 1 bis 5, angegeben.

Die Thermoregulierungsanordnung dient zur Temperierung bzw. Temperaturregulierung eines damit in thermischem Kontakt stehenden Systems, insbesondere innerhalb eines Fahrzeugs, und umfasst ein Reaktionsgassystem. Das Reaktionsgassystem wiederum umfasst eine Reaktionsgasquelle für Reaktionsgas, eine Reaktionsgassenke zur chemischen Umsetzung des Reaktionsgases unter Energiefreisetzung, eine Temperieranordnung zur Erzeugung von Wärme und/oder Kälte mit einer ersten Reaktorvorrichtung, die mit einem ersten Reaktionsmaterial gefüllt ist und einer zweiten Reaktorvorrichtung, die mit einem zweiten Reaktionsmaterial gefüllt ist, Leitungsmittel zur Strömungsverbindung zwischen der Reaktionsgasquelle, der Reaktionsgassenke und/oder den Reaktorvorrichtungen und eine Ventilanordnung zur Steuerung des Strömungswegs des Reaktionsgases über die Leitungsmittel. Weiterhin umfasst die Thermoregulierungsanordnung ein Wärmetransportsystem mit Leitungsmitteln, insbesondere Rohrleitungsmittel, zur Leitung von Wärmeträgermedium derart, dass das Wärmeträgermedium mit Reaktionsmaterial in zumindest einer der Reaktorvorrichtungen in thermischen Kontakt bringbar oder gebracht ist.

Erfindungsgemäß sind in dem Reaktionsgassystem Mittel, insbesondere Druck- und/oder Durchflussregulierungsmittel in den Leitungsmitteln, angeordnet, mittels derer der jeweilige Betriebsdruck in den Reaktorvorrichtungen und/oder die Reaktionsgas-Massenströme zu bzw. von den Reaktorvorrichtungen einstellbar, d. h. steuerbar bzw. regelbar, sind. Zu diesem Zweck umfasst die Thermoregulierungseinrichtung erfindungsgemäß eine Steuereinrichtung, die auch einer übergeordneten (Fahrzeug-) Steuereinrichtung zugeordnet sein kann. Die Druck-und/oder Durchflussregulierungsmittel, beispielsweise Ventilmittel zur Druck- und/oder Massenstromsteuerung bzw.-regelung, können insbesondere stromauf der Reaktorvorrichtungen, in einem (z. B. einzigen) Leitungsstrang zwischen der Reaktionsgasquelle und den Reaktorvorrichtungen und/oder stromab der Reaktorvorrichtungen, in einem Leitungsstrang zwischen den Reaktorvorrichtungen und der Reaktionsgassenke angeordnet sein.

Für eine präzise Steuerbarkeit bzw. Regelbarkeit sind der ersten und/oder der zweiten Reaktorvorrichtung zumindest ein Sensorelement zur Ermittlung des Betriebsdrucks zugeordnet.

Vorzugsweise ist die Ventilanordnung derart ausgebildet, dass die erste und/oder die zweite Reaktorvorrichtung in Strömungsverbindung mit der Reaktionsgasquelle bringbar oder gebracht ist und/oder die jeweils andere Reaktorvorrichtung in Strömungsverbindung mit der Reaktionsgassenke bringbar oder gebracht ist. Dabei sind die Strömungsverbindungen in einem Umschaltvorgang umschaltbar. Auf diese Weise kann die Thermoregulierungsanordnung vorteilhaft flexibel in unterschiedlichen Betriebsweisen bzw. Betriebsmodi betrieben werden, beispielsweise in einem kontinuierlichen Betrieb und/oder einem "verstärkten" Betrieb jeweils zur Wärme- und/oder Kälteerzeugung, wie in Zusammenhang mit den Ausführungsvarianten des erfindungsgemäßen Verfahrens näher beschrieben.

Vorzugsweise sind die Leitungsmittel stromab der Reaktionsgasquelle, insbesondere stromab eines ersten Druck- und/oder Durchflussregulierungsmittels, in zumindest zwei parallele Teilleitungsstränge mit jeweils einem Ventilmittel der Ventilanordnung aufgeteilt, wobei die Teilleitungsstränge mittels der Ventilmittel mit jeweils einer der Reaktorvorrichtungen in Strömungsverbindung bringbar sind. Stromab der Ventilmittel, stromauf der Reaktionsgassenke, können die Teilleitungsstränge zu einem (einzigen) Leitungsstrang zusammengeführt sein. Die Ventilanordnung umfasst die Ventilmittel, die vorzugsweise als Wegeventile, besonders bevorzugt jeweils als 3/2-Wegeventile ausgebildet sind. In den Teilsträngen können jeweils die Sensorelemente, insbesondere in Form von Druck-Sensorelementen, angeordnet sein. In dem (einzigen) Leitungsstrang stromab der Teilleitungsstränge kann ein weiteres Druck- und/oder Durchflussregulierungsmittel angeordnet sein. Durch eine derartige Anordnung der Leitungsmittel mit der Ventilanordnung bzw. den Ventilmitteln sind die Strömungsverbindungen des Reaktionsgases flexibel für unterschiedliche Betriebsmodi umschaltbar.

Für eine erhöhte Flexibilität im Betrieb weisen die Leitungsmittel (des Reaktionsgassystems) einen Bypassabschnitt mit einem Bypassventilmittel auf, über welchen das Reaktionsgas unmittelbar, ohne Strömung über die Reaktorvorrichtung/en, zwischen der Reaktionsgasquelle und der Reaktionsgassenke strömen kann. Der Bypassabschnitt ist vorzugsweise als separater Strang parallel zu den Teilsträngen ausgebildet bzw. angeordnet.

Vorzugsweise weist das Wärmetransportsystem einen ersten Teilkreislauf mit einem ersten Eintritt und einem ersten Austritt zur Strömungskopplung an ein erstes zu temperierendes System (oder mehrere, in Reihe und/oder parallel angeordnete Systeme) und einen zweiten Teilkreislauf mit einem zweiten Eintritt und einem zweiten Austritt zur Strömungskopplung an ein zweites zu temperierendes System (oder mehrere, in Reihe und/oder parallel angeordnete Systeme) auf. Für eine effiziente Nutzung der Temperieranordnung wird vorzugsweise der erste Teilkreislauf an ein zu kühlendes System (das als Wärmequelle dient) und der zweite Teilkreislauf an ein zu wärmendes System (das als Wärmesenke dient) angekoppelt. Die Systeme können, z. B. je nach Randbedingungen, z. B. in Abhängigkeit der Umgebungstemperatur, aus dem kühlenden in den wärmenden Teilkreislauf umgeschaltet und/oder einzelne Systeme von bzw. aus den Teilkreisläufen zu- oder herausgeschaltet werden. Insbesondere in Kombination mit der Einstimmigkeit des Betriebsdrucks und den unterschiedlichen Betriebsmodi kann das Verfahren zum Betreiben der Temperieranordnung flexibel auf derartige Systemvariationen reagieren.

Für einen effizienten Betrieb der Thermoregulierungsanordnung umfasst das Wärmetransportsystem eine Ventilanordnung, mittels der der erste Teilkreislauf mit der ersten Reaktorvorrichtung und/oder mit der zweiten Reaktorvorrichtung zur Wärmeübertragung in Strömungsverbindung bringbar oder gebracht ist und/oder mittels der der zweite Teilkreislauf mit der ersten Reaktorvorrichtung und/oder mit der zweiten Reaktorvorrichtung zur Wärmeübertragung in Strömungsverbindung bringbar oder gebracht ist. Die Strömungsverbindungen sind in einem Umschaltvorgang umschaltbar, um insbesondere einen kontinuierlichen Betrieb, oder auch andere Betriebsmodi, zu ermöglichen.

Für eine hohe Leistungsdichte umfasst das Reaktionsmaterial vorzugsweise einen Feststoff aufweisend ein Metallhydrid, insbesondere eine Titan-Mangan-Legierung, und/oder ist das Reaktionsgas durch Wasserstoff gebildet. Für die Anwendung in der Thermoregulierungsanordnung sind Titan-Mangan-Legierungen besonders geeignet, insbesondere aufgrund der für den Anwendungsfall geeigneten Druck-Temperatur-Korrelationen bei Absorption und Desorption in Verbindung mit Wasserstoff als Reaktionsgas. Je nach Anwendungsfall kann es vorteilhaft sein, wenn die erste Reaktorvorrichtung mit einem anderen Reaktionsmaterial, z. B. mit einer anderen Titan-Mangan-Legierung, gefüllt ist als die zweite Reaktorvorrichtung. Für eine kontinuierliche Leistungsbereitstellung können in diesem Falle vorteilhaft auch zwei Paare an Reaktorvorrichtungen (umfassend jeweils eine erste und eine zweite Reaktorvorrichtung mit jeweils gleichem Reaktionsmaterial) mit unterschiedlichen Reaktionsmaterialien vorhanden sein.

Eine vorteilhafte Nutzbarkeit der durch die Energiewandeleinrichtung bereitgestellten Energie ergibt sich, wenn die Energiewandeleinrichtung mit einer Energiespeichereinrichtung, insbesondere zur Speicherung elektrischer Energie (z. B. Batterieanordnung), elektrisch gekoppelt ist.

Ein vergleichsweise hoher Wirkungsgrad der Thermoregulierungsanordnung ist erreichbar, wenn die Reaktorvorrichtungen jeweils einen Plattenwärmeübertrager umfassen, bei dem primäre Spaltkanäle zur Aufnahme von Reaktionsmaterial eine größere Spalthöhe aufweisen als sekundäre Spaltkanäle zur Durchströmung von Wärmeträgerfluid, wobei das Verhältnis der Spalthöhen der sekundären Spaltkanäle zu den Spalthöhen der primären Spaltkanäle zwischen 1:2 und 1:10, vorzugsweise zwischen 1:3 und 1:8, besonders bevorzugt zwischen 1:4 und 1:6, beträgt. Dabei wird in Summe ein höheres Volumen an Reaktionsmaterial bereitgestellt, als von Wärmeträgermedium durchströmt wird. Untersuchungen der Erfinder haben gezeigt, dass sich bei einer derartigen Ausbildung eine effiziente Reaktorvorrichtung mit einer hohen Leistungsdichte bereitstellen lässt. Weiterhin hat sich eine kompakte Struktur des Reaktionsmaterials in Form eines Presskörpers (z. B. in Art eines Pellets oder Briketts) als vorteilhaft herausgestellt, der für einen verbesserten Stofftransport mit Gaskanälen durchzogen sein kann.

In einer bevorzugten Ausbildungsvariante ist neben der Temperieranordnung zumindest eine weitere Temperieranordnung, insbesondere eine Kompressionskälteanordnung, vorhanden, die zumindest teilweise von der Reaktionsgassenke, insbesondere unter Zwischenschaltung einer elektrischen Energiespeichereinrichtung, mit elektrischer Energie versorgbar bzw. versorgt ist. So ist eine erhöhte Effizienz der Thermoregulierungsanordnung erreichbar.

Vorzugsweise ist die weitere Temperieranordnung innerhalb des Wärmetransportsystems derart mit thermischem Kontakt zu dem Wärmeträgermedium in zumindest einem der Teilkreisläufe angeordnet, dass ein Teil der thermischen Leistung zur Temperaturänderung des Wärmeträgermediums durch die weitere Temperieranordnung erbracht wird.

Eine signifikante Wirkungsgradsteigerung, durch erhöhte Wirkungsgrade beider einzelner Temperieranordnungen im Vergleich zu ihrer Einzelanordnung, ist erreichbar, wenn die weitere Temperieranordnung strömungsmechanisch in Reihe stromab zu der Temperieranordnung angeordnet ist.

Besondere Ausbildungsvarianten des Fahrzeugs sind in Zusammenhang mit den vorstehend beschriebenen Varianten des Verfahrens und der Thermoregulierungsanordnung sinngemäß beschrieben.

Nachfolgend wird die Erfindung anhand von Ausführungsbeispielen unter Bezugnahme auf die Zeichnungen näher erläutert. Es zeigen:
- Fig. 1: ein Fließschema einer nicht erfindungsgemäßen Thermoregulierungsanordnung mit einer Temperieranordnung und mit einem damit in thermischem Kontakt stehenden Wärmetransportsystem zur Temperaturregulierung zumindest eines Systems,
- Fig. 2: ein Fließschema einer erfindungsgemäßen Thermoregulierungsanordnung, mit einer zusätzlich zu einer Temperieranordnung vorhandenen weiteren Temperieranordnung.

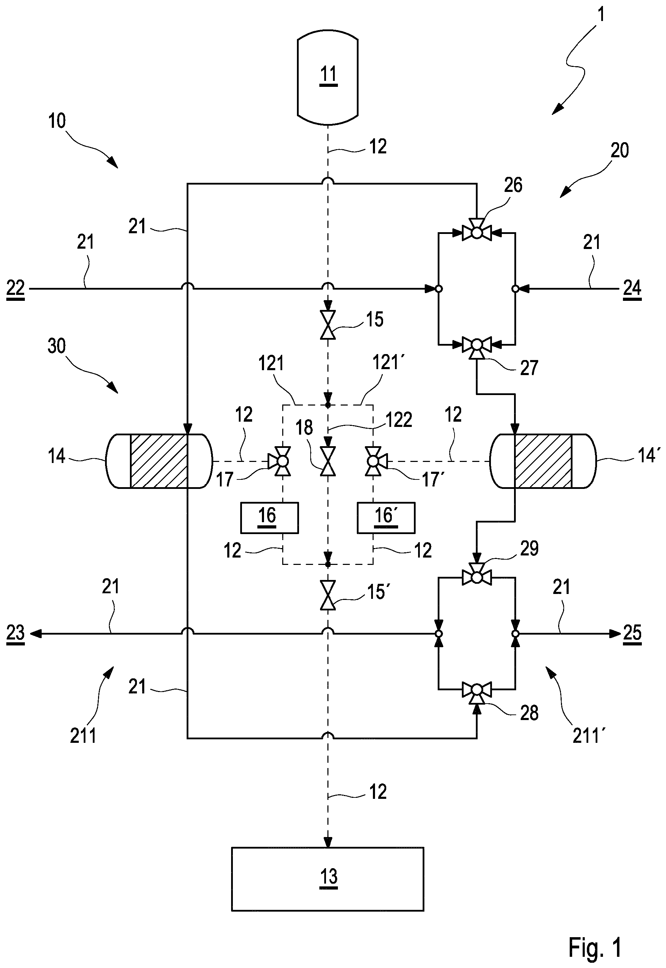

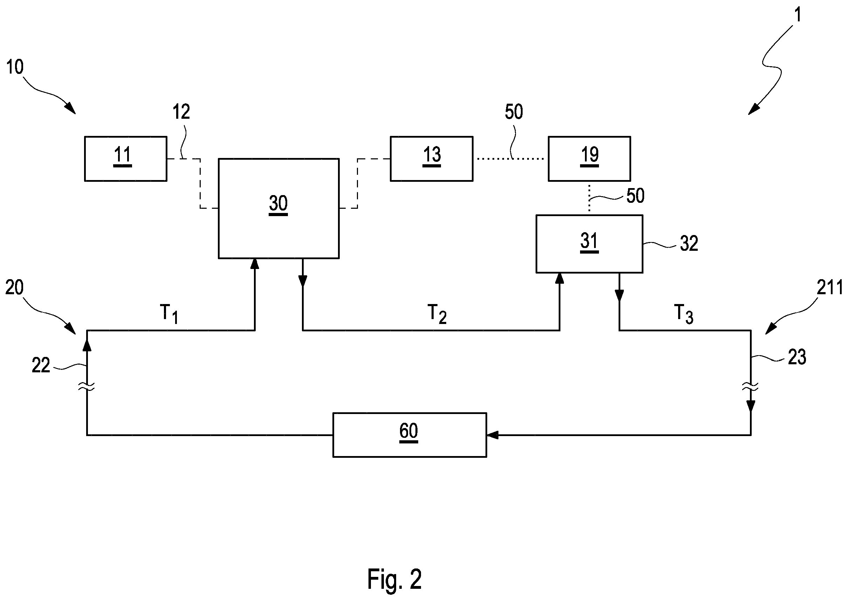

Fig. 1 zeigt ein Fließschema einer Thermoregulierungsanordnung 1 zur Temperaturregulierung bzw. Temperierung z. B. eines (vgl. Fig. 2) oder mehrerer damit in thermischem Kontakt stehender Systeme 60. Die Thermoregulierungsanordnung 1 und die Systeme 60 können beispielsweise innerhalb eines Fahrzeugs angeordnet sein. Bei den Systemen 60 kann es sich z. B. um einen Fahrzeuginnenraum, um Leistungselektronik eines Fahrzeuges, Energieerzeugungsaggregate, wie eine Brennstoffzelle und/oder einen Verbrennungsmotor, und/oder eine Energiespeicheranordnung, wie beispielsweise eine Batterieanordnung handeln. Die Systeme 60 können als Wärmequelle und/oder als Wärmesenke dienen, was sich je nach System 60 in Abhängigkeit von Randbedingungen, z. B. von der Umgebungstemperatur, ändern kann.

Das Fahrzeug kann insbesondere einen Brennstoffzellenantrieb aufweisen, z. B. als alleiniges Antriebsystem oder in Kombination mit z. B. einem Elektro- und/oder Verbrennungsmotor als Hybridvariante. Das Fahrzeug umfasst ein Reaktionsgassystem 10 mit einer Reaktionsgasquelle insbesondere in Form einer Speichereinrichtung 11 für Reaktionsgas, insbesondere Wasserstoff, und eine Reaktionsgassenke insbesondere in Form einer mit Reaktionsgas betriebenen Energiewandeleinrichtung 13. Die Energiewandeleinrichtung 13 steht mittelbar (unter Zwischenschaltung zumindest einer Reaktorvorrichtung 14, 14') und/oder unmittelbar über Leitungsmittel 12 mit der Speichereinrichtung 11 in Strömungsverbindung und wird aus der Speichereinrichtung 11 mit Reaktionsgas versorgt. In der Energiewandeleinrichtung 13 wird die in dem Reaktionsgas gespeicherte Energie in eine andere Energieform umgesetzt. Bei der Energiewandeleinrichtung 13 kann es sich z. B. um eine Brennstoffzelle handeln.

Die Thermoregulierungsanordnung 1 umfasst vorzugsweise Teile der in dem Fahrzeug vorhandenen (Antriebs-)Peripherie, insbesondere das Reaktionsgassystem 10 mit der Speichereinrichtung 11 und der Energiewandeleinrichtung 13. In das Reaktionsgassystem 10 ist strömungsmechanisch eine Temperieranordnung 30 der Thermoregulierungsanordnung 1 eingebunden, die basierend auf dem Prinzip der thermochemischen Reaktion (bzw. Sorption), insbesondere Absorption und Desorption, Wärme und/oder Kälte erzeugen kann. Zur Wärmeabgabe bzw. Wärmefreisetzung wird dabei das Reaktionsgas in einer exothermen Reaktion reversibel an das Reaktionsmaterial als Speichermaterial gebunden (Absorption). Zur Wärmeaufnahme bzw. "Kältefreisetzung" wird das Reaktionsgas in der endothermen Rückreaktion aus dem Reaktionsmaterial freigesetzt (Desorption). Der Beladungszustand des Feststoffes ist an ein bestimmtes Temperatur- und Druckniveau gekoppelt, welches sich im Gleichgewicht einstellt. Dieses wiederum ist abhängig von dem jeweiligen Reaktionssystem, d. h. dem verwendeten Reaktionsgas und Feststoff bzw. Reaktionsmaterial.

Die Temperieranordnung 30 weist zumindest zwei Reaktorvorrichtungen 14, 14' auf, die jeweils mit Reaktionsmaterial gefüllt sind. Das Reaktionsmaterial ist vorzugsweise durch einen Feststoff gebildet und umfasst bevorzugt Metallhydrid. Das Reaktionsmaterial, insbesondere Metallhydrid, und das Reaktionsgas, insbesondere Wasserstoff, bilden komplementäre Bestandteile des thermochemischen Reaktions-, insbesondere Sorptionssystems. Die Verwendung von Wasserstoff als Reaktionsgas bietet den Vorteil einer hohen erreichbaren Leistungsdichte. Als Feststoffe sind, insbesondere in Verbindung mit Wasserstoff, Titan-Mangan-Legierungen für die Anwendung in der Thermoregulierungsanordnung 1 besonders geeignet, insbesondere aufgrund für den Anwendungsfall geeigneter Druck-Temperatur-Korrelationen bei Absorption und Desorption. Je nach Anwendungsfall kann es vorteilhaft sein, wenn die erste Reaktorvorrichtung 14 mit einem anderen Reaktionsmaterial, z. B. mit einer anderen Titan-Mangan-Legierung, gefüllt ist als die zweite Reaktorvorrichtung 14'.

Die Temperieranordnung 30 mit den Reaktorvorrichtungen 14, 14' ist innerhalb der Leitungsmittel 12 zwischen der Speichereinrichtung 11 und der Energiewandeleinrichtung 13 angeordnet. In den Leitungsmitteln 12 ist eine Ventilanordnung vorhanden, mittels derer die Strömungswege des Reaktionsgases über die Leitungsmittel 12 steuerbar sind. Insbesondere können die Reaktorvorrichtungen 14, 14' einzelnen oder gleichzeitig mit dem Reaktionsgas aus der Speichereinrichtung 11 versorgt werden. Weiterhin kann aus einer oder beiden Reaktorvorrichtungen 14, 14' Reaktionsgas über die Leitungsmittel 12 der Energiewandeleinrichtung 13 zugeführt werden.

Dabei sind hier beispielhaft die Leitungsmittel 12 ausgehend von der Speichereinrichtung 11 zunächst als ein einziger Leitungsstrang ausgebildet. Dieser Leitungsstrang teilt sich in zwei parallele Teilleitungsstränge 121, 121' zur Versorgung der jeweiligen Reaktorvorrichtungen 14, 14' auf. Für eine Umschaltbarkeit der Strömungswege bzw. Strömungsverbindungen sind in den Teilleitungssträngen 121, 121' jeweils Ventilmittel 17, 17' der Ventilanordnung, z. B. 3/2-Wegeventile, angeordnet, über die die Teilleitungsstränge 121, 121' jeweils mit den Reaktorvorrichtungen 14, 14' verbunden werden können. Je nach Ventilstellung kann dabei eine Strömungsverbindung der jeweiligen Reaktorvorrichtung 14, 14' zu der Speichereinrichtung 11 oder zu der Energiewandeleinrichtung 13 hergestellt werden.

Parallel zu den Teilleitungssträngen 121, 121' ist ein Bypassabschnitt 122 der Leitungsmittel 12 mit einem Bypassventilmittel 18 der Ventilanordnung vorhanden. Über den Bypassabschnitt 122 kann das Reaktionsgas unmittelbar, d.h. ohne Zwischenschaltung der Reaktorvorrichtungen 14, 14', von der Speichereinrichtung 11 zu der Energiewandeleinrichtung 13 strömen. So kann Reaktionsgas zusätzlich zur Versorgung der Reaktorvorrichtung/en 14, 14' oder ausschließlich über den Bypassabschnitt 122 zu der Energiewandeleinrichtung 13 geführt werden. Dies kann beispielsweise bei einem hohen Reaktionsgasbedarf der Energiewandeleinrichtung 13, beispielsweise bei einem hohen Leistungsbedarf des Fahrzeuges, vorteilhaft sein, oder in einem Betriebsmodus der Temperieranordnung, wobei der Energiewandeleinrichtung 13 kein Reaktionsgas aus den Reaktorvorrichtungen 14, 14' zugeführt wird, bzw. wenn die Temperieranordnung 30 nicht betrieben wird.

In vollständig gefülltem Zustand weist die Speichereinrichtung 11 vorzugsweise einen hohen Druck von z. B. mehr als 100 bar auf, um eine hohe Masse an Reaktionsgas aufnehmen zu können. Die Energiewandeleinrichtung 13 hingegen weist einen bedeutend niedrigeren Arbeitsdruck, beispielsweise zwischen 5 bar und 40 bar, auf. Zwischen der Speichereinrichtung 11 und der Energiewandeleinrichtung 13 liegt somit ein Druckgefälle, zur Förderung des Reaktionsgases, vor. Gemäß einem Kerngedanken der Erfindung ist der Aufbau der Thermoregulierungsanordnung 1 derart, dass dieses Druckgefälle als Triebkraft für die Temperieranordnung 1 genutzt wird.

Zur kontrollierten Nutzung des Druckgefälles ist stromab der Speichereinrichtung 11 und stromauf der Reaktorvorrichtung/en 14, 14' bzw. der Reaktionsmaterialien zumindest ein erstes Druck- und/oder Durchflussregulierungsmittel angeordnet. Weiterhin ist stromauf der Energiewandeleinrichtung 13 und stromab der Reaktorvorrichtung/en 14, 14' zumindest ein zweites Druck- und/oder Durchflussregulierungsmittel angeordnet. Die Druck- und/oder Durchflussregulierungsmittel können beispielsweise, wie in Fig. 1 gezeigt, in den Leitungssträngen stromauf und stromab der Teilleitungsstränge 121, 121', hier in Form eines ersten und eines zweiten Druck-Ventilmittels 15, 15', vorhanden sein. Auf diese Weise lässt sich der Druck aus der Speichereinrichtung 11 auf einen jeweiligen Betriebsdruck für die Reaktorvorrichtungen 14, 14' reduzieren. Der Betriebsdruck liegt somit zwischen dem Druck in der Speichereinrichtung 11 und dem Arbeitsdruck in der Energiewandeleinrichtung 13.

Erfindungsgemäß wird der Druck und/oder der Massenstrom an Reaktionsgas in die bzw. von den Reaktorvorrichtungen 14, 14' mittels einer (hier nicht gezeigten) Steuereinrichtung zur Steuerung der Thermoregulierungsanordnung 1 gesteuert bzw. geregelt werden (innerhalb der durch die Speichereinrichtung 11 und die Energiewandeleinrichtung 13 vorgegebenen Randbedingungen). Vorzugsweise kann der Betriebsdruck des bzw. der Reaktorvorrichtung/en 14, 14' und/oder der Massenstrom an Reaktionsgas, je nach Betriebsbedingungen bzw. Betriebsmodus unterschiedlich eingestellt werden. Insbesondere ist durch die Einstellung des Massenstroms die Leistung und durch eine Einstellung des Betriebsdrucks das Temperaturniveau steuer- bzw. regelbar. So lassen sich, aufgrund der Druck-Temperatur-Korrelation des Reaktionssystems, unterschiedliche Betriebstemperaturen bzw. Leistungen im Betrieb innerhalb der Reaktorvorrichtungen 14, 14' realisieren. Beispielsweise kann der Betriebsdruck über das erste Druckventil 15 unter Kenntnis des verwendeten Reaktionssystems zur Regulierung bzw. Temperierung des Systems 60 in Abhängigkeit der Umgebungstemperatur durch die Steuereinrichtung eingestellt werden. So kann der Betrieb der Thermoregulierungsanordnung 1 an die jeweilige Thermoregulierungsaufgabe angepasst werden. So wird z. B. eine von der Umgebungstemperatur abhängige Temperierung des Fahrzeuginnenraums und/oder Beheizung oder Kühlung einer elektrischen Speichereinrichtung bzw. Batterieanordnung ermöglicht.

Für eine derartige Steuerbarkeit bzw. Regelbarkeit sind vorzugsweise den Reaktorvorrichtungen 14, 14' jeweils zumindest ein Sensorelement 16, 16' zur Ermittlung des Betriebsdrucks und/oder der Betriebstemperatur zugeordnet. In Fig. 1 sind die Sensorelemente 16, 16' beispielhaft jeweils den Reaktorvorrichtungen 14, 14' zugeordneten, wobei sie stromab derselben in den jeweiligen Teilleitungssträngen 121, 121' angeordnet sind. Möglich wäre auch eine Anordnung an anderer Stelle, beispielsweise innerhalb der Reaktorvorrichtungen 14, 14'.

Zur thermischen Kopplung der Temperieranordnung 30 mit den zu temperierenden Systemen 60 umfasst die Thermoregulierungsanordnung 1 ein Wärmetransportsystem 20. Das Wärmetransportsystem 20 weist Leitungsmittel 21 zur Leitung eines Wärmeträgermediums auf. Das Wärmeträgermedium kann beispielsweise eine Flüssigkeit sein, welche auch so gewählt sein kann, dass sie innerhalb des Wärmetransportsystems einen Phasenübergang vollziehen kann (Kältemittel). Denkbar wäre auch ein Gas, insbesondere Luft, als Wärmeträgermedium, wobei die Leitungsmittel 21 beispielsweise Leitschaufeln und -wände umfassen können. Das Wärmetransportsystem 20 kann dabei z. B. Klappen zur Steuerung der Luftströmungswege aufweisen. Die Systeme 60 stehen vorzugsweise jeweils über einen Wärmetauscher in Kontakt mit dem Wärmeträgermedium.

Das Wärmetransportsystem 20 weist einen ersten Teilkreislauf 211 mit einem ersten Eintritt 22 und einem ersten Austritt 23 auf, um eine Strömungsverbindung zu einer ersten Wärmequelle oder Wärmesenke, insbesondere eines ersten zu temperierenden Systems 60, herzustellen. Weiterhin weist das Wärmetransportsystem einen zweiten Teilkreislauf 211' mit einem zweiten Eintritt 24 und einem zweiten Austritt 25 auf, um eine Strömungsverbindung zu einer zweiten Wärmequelle oder Wärmesenke, insbesondere eines zweiten zu temperierenden Systems 60, herzustellen. Beispielsweise kann der erste Teilkreislauf 211 an ein zu kühlendes System 60 angeschlossen sein. Der zweite Teilkreislauf 211' ist dann vorzugsweise an ein zu beheizendes System angeschlossen. So ist dem Wärmetransportsystem 20 jeweils zumindest ein zu kühlendes und ein zu beheizendes System 60 zugeordnet, so dass sowohl die bei der Absorption freigesetzte Wärme als auch die bei der Desorption freigesetzte Kälte der Temperieranordnung 1 genutzt werden kann.

Durch eine entsprechend ausgebildete Ventilanordnung des Wärmetransportsystems 20 kann der erste Teilkreislauf 211 wechselweise mit der Reaktorvorrichtung 14 und der Reaktorvorrichtung 14' und gleichzeitig der zweite Teilkreislauf 211' mit der jeweils anderen Reaktorvorrichtung 14', 14 zur Wärmeübertragung von dem bzw. in das Reaktionsmaterial in Strömungsverbindung gebracht werden. Die Umschaltung bzw. der Wechsel der Teilkreisläufe 211, 211' auf die jeweils andere Reaktorvorrichtung 14, 14' erfolgt in einem Umschaltvorgang. Die Ventilanordnung ermöglicht weiterhin eine Strömungsverbindung des ersten oder des zweiten Teilkreislaufs 211, 211' mit beiden Reaktorvorrichtungen 14, 14'. Diese Verschaltung ist insbesondere in einem "verstärkten" Betriebsmodus zweckmäßig, bei dem beide Reaktorvorrichtungen 14, 14' gleichzeitig Wärme an das Wärmeträgermedium abgeben oder aus diesem aufnehmen.

Dazu weist die Ventilanordnung des Wärmetransportsystems 20 beispielhaft stromauf der Reaktorvorrichtungen 14, 14' zwei Ventilmittel 26 und 27 auf, die vorzugsweise als Wegeventile, insbesondere als 3/2-Wegeventile, ausgebildet sind. An die Ventilmittel 26, 27 sind jeweils die Zuläufe der ersten und der zweiten Teilkreisläufe 211, 211' sowie die Reaktorvorrichtung 14 (an das Ventilmittel 26) bzw. die Reaktorvorrichtung 14' (an das Ventilmittel 27) angeschlossen. Stromab der Reaktorvorrichtungen 14, 14' sind zwei Ventilmittel 28, 29 vorhanden, an die die Reaktorvorrichtung 14 (an das Ventilmittel 28) bzw. die Reaktorvorrichtung 14' (an das Ventilmittel 29) angeschlossen sind, sowie jeweils der erste und der zweite Teilkreislauf 211, 211'.

Im Betrieb kann die Thermoregulierungsanordnung 1 sowohl kontinuierlich (Betriebsmodus "kontinuierlicher Betrieb") als auch in einem sogenannten "verstärkten" Betriebsmodus betrieben werden. Im kontinuierlichen Betrieb wird sowohl kontinuierlich Kälte als auch Wärme erzeugt, wobei die Temperieranordnung 30 zyklisch betrieben wird. Dabei wird in einem Halbzyklus Reaktionsgas aus der Speichereinrichtung 11 in eine der Reaktorvorrichtungen 14 oder 14' geleitet und dort unter Wärmefreisetzung absorbiert. Die Wärmeabgabe aufgrund der exothermen Reaktion, d. h. die Betriebstemperatur der Reaktorvorrichtung 14 oder 14' und/oder die abgegebene Leistung, können über die Einstellung des Drucks und/oder des Massenstroms an Reaktionsgas in der bzw. in die entsprechende Reaktorvorrichtung 14 oder 14' eingestellt werden. In der jeweils anderen Reaktorvorrichtung 14' oder 14 wird zeitgleich Reaktionsgas unter Wärmeaufnahme aus dem Wärmeträgermedium desorbiert. Das Reaktionsgas wird über die Leitungsmittel 12 der Energiewandeleinrichtung 13 zugeführt, wo es energetisch umgesetzt wird. Nach einer Halbzykluszeit von beispielsweise zwischen 30 s und 300 s, vorzugsweise zwischen 60 s und 180 s werden die Reaktorvorrichtungen 14, 14' in einem Umschaltvorgang durch entsprechende Umschaltung der Ventilanordnungen in dem Reaktionsgassystem 10 und in dem Wärmetransportsystem 20 umgeschaltet. Nun wird der jeweils anderen Reaktorvorrichtung 14' oder 14 Reaktionsgas aus der Speichereinrichtung 11 zugeführt und aus der anderen Reaktorvorrichtung 14 oder 14' Reaktionsgas an die Energiewandeleinrichtung 13 abgegeben.

Der Umschaltvorgang kann beispielsweise in Abhängigkeit von Signalen der vorhandenen Sensorelemente 16, 16' durch die Steuereinrichtung eingeleitet werden, beispielsweise wenn ein bestimmtes Druck- und/oder Temperaturniveau erreicht ist. Beispielsweise kann der Umschaltvorgang eingeleitet werden, sobald der Druck an dem Sensorelement 16 bzw. 16' (je nachdem, welche der Reaktorvorrichtungen 14, 14' mit der Energiewandeleinrichtung 13 in Strömungsverbindung steht) den Arbeitsdruck bzw. den Versorgungsdruck der Energiewandeleinrichtung 13 erreicht (oder unterschreitet).

Vorliegend bildet beispielhaft der erste Teilkreislauf 211 einen Kältekreislauf, der an ein oder mehrere zu kühlende/s System/e 60 bzw. Wärmequelle/n angeschlossen ist. Zur "kontinuierlichen Kälteerzeugung" im kontinuierlichen Betrieb wird die Ventilanordnung des Wärmetransportsystems so eingestellt, dass das Wärmeträgermedium über den ersten Eintritt 22 und über das Ventilmittel 26 oder 27 jeweils in die desorbierende, d. h. Wärme aufnehmende, Reaktorvorrichtung 14 oder 14' geleitet wird. Dort gibt das Wärmeträgermedium Wärme an das Reaktionsmaterial ab und wird so gekühlt. Stromab der Reaktorvorrichtung 14 oder 14' wird das Wärmeträgermedium über das Ventilmittel 28 oder 29 dem ersten Austritt 23 zugeführt.

Der zweite Teilkreislauf 211' bildet beispielhaft einen Wärmekreislauf, der an ein oder mehrere zu erwärmende/s System/e 60 bzw. Wärmesenke/n angeschlossen ist. Zur "kontinuierlichen Wärmeerzeugung" im kontinuierlichen Betrieb wird die Ventilanordnung des Wärmetransportsystems 20 so eingestellt, dass das Wärmeträgermedium über den zweiten Eintritt 24 und über das Ventilmittel 27 oder 26 jeweils an die absorbierende, d. h. wärmeabgebende, Reaktorvorrichtung 14' oder 14 geleitet wird. Dort nimmt das Wärmeträgermedium Wärme aus dem Reaktionsmaterial auf und wird so erwärmt. Stromab der Reaktorvorrichtung 14' oder 14 wird das Wärmeträgermedium über das Ventilmittel 29 oder 28 dem zweiten Austritt 25 zugeführt.

Der kontinuierliche Betrieb kann sowohl während der Fahrt des Fahrzeuges als auch bei stehendem Fahrzeug durchgeführt werden. Die kontinuierliche Kälteerzeugung kann beispielsweise zur Substitution oder Verringerung der Auslegungsgröße einer konventionellen elektrischen Klimaanlage zur Innenraum- und/oder Komponentenkühlung (beispielsweise einer elektrischen Energiespeichereinrichtung, Batterieanordnung) dienen. Die kontinuierliche Wärme kann beispielsweise der Substitution oder Verringerung der Auslegungsgröße einer konventionellen elektrischen Heizung zur Innenraum- und/oder Komponentenerwärmung (beispielsweise einer Brennstoffzellenanordnung) dienen.

Je nach Jahreszeit können unterschiedliche Systeme 60 als Wärmequelle oder Wärmesenke verwendet werden. Im Sommer kann beispielsweise als Wärmequelle, d.h. zu kühlendes System 60, die Zuluft des Fahrzeuginnenraums (mit einer Temperatur von etwa 15 bis 45 °C), eine elektrische Energiespeichereinrichtung bzw. Batterieanordnung mit einer Temperatur von z. B. 20 °C bis 40 °C und/oder eine Brennstoffzellenanordnung, mit einer Betriebstemperatur von beispielsweise 90 °C bis 120 °C dienen. Als Wärmesenke, d.h. zu erwärmendes System 60, kann beispielsweise die Abluft des Fahrzeuginnenraums (Temperatur etwa 22 °C bis 27 °C) und/oder die Umgebungsluft (z. B. 30 °C bis 45 °C) dienen. Im Winter kann z. B. die Zuluft des Fahrzeuginnenraums und/oder Leistungselektronik des Fahrzeugs als Wärmesenke dienen.

Bei Fahrt kann die durch die Energiewandeleinrichtung 13 erzeugte Energie unmittelbar zum Antrieb des Fahrzeuges genutzt werden. Bei stehendem Fahrzeug, z. B. zur Erzeugung einer kontinuierlichen Standkälte oder -wärme, wird vorzugsweise die durch die Energiewandeleinrichtung 13 bereitgestellte (elektrische) Energie in einer vorhandenen elektrischen Energiespeichereinrichtung 19 (vgl. Fig. 2) gespeichert. Alternativ oder zusätzlich kann die Energie weiteren Hilfsaggregaten, wie z. B. einem Klimakompressor oder einer zusätzlichen Heizeinrichtung, zur Verfügung gestellt werden.

In dem "verstärkten" Betriebsmodus übertragen beide Reaktorvorrichtungen 14, 14' parallel Kälte oder Wärme an das Wärmeträgermedium über eine Betriebsdauer von beispielsweise 30 s bis 300 s, beispielsweise 60 s und 180 s. Bei der verstärkten Kälteerzeugung sind zu Beginn des Betriebs die beiden Reaktorvorrichtungen 14, 14' vorzugsweise vollständig mit Reaktionsgas beladen, d.h. die Reaktorvorrichtungen 14, 14' befinden sich bei dem eingestellten Betriebsdruck in einem Druck-Temperatur-Gleichgewicht. Der verstärkte Betrieb wird durch Anlegen eines niedrigeren Betriebsdrucks an beide Reaktorvorrichtungen 14, 14' gestartet. Dadurch beginnt der Desorptionsbetrieb und Reaktionsgas strömt aus beiden Reaktorvorrichtungen 14, 14' in die Energiewandeleinrichtung 13.

Während der kontinuierlichen Kälteerzeugung wird das Wärmeträgermedium des ersten, kalten, Teilkreislaufs 211 aus dem ersten Eintritt 22 (über sowohl das Ventilmittel 26 als auch das Ventilmittel 27) zu den Reaktorvorrichtungen 14 und 14' geleitet. Dort gibt das Wärmeträgermedium Wärme an das Reaktionsmaterial ab und wird dadurch gekühlt. Anschließend wird das Wärmeträgermedium über die Ventilmittel 28 und 29 dem ersten Austritt 23 zugeführt. Der zweite Teilkreislauf 211' ist nicht an die Reaktorvorrichtungen 14, 14' angeschlossen.

Anschließend an die "verstärkten" Kälteerzeugung kann die Energiewandeleinrichtung 13 zum Betrieb über den Bypassabschnitt 122 mit Reaktionsgas versorgt werden, während die Reaktorvorrichtungen 14, 14' wieder mit Reaktionsgas beladen werden. Anschließend können die Reaktorvorrichtungen z.B. erneut in dem "verstärkten" Betriebsmodus entladen werden.

Bei der "verstärkten" Wärmeerzeugung sind zu Beginn des Betriebs die beiden Reaktorvorrichtungen 14, 14' vollständig von Reaktionsgas entladen, d. h. die Reaktorvorrichtungen 14, 14' befinden sich bei dem eingestellten Betriebsdruck, beispielsweise dem Arbeits- und/oder Versorgungsdruck der Energiewandeleinrichtung 13, in einem Druck-Temperatur-Gleichgewicht. Der verstärkte Betrieb wird durch Anlegen eines höheren Betriebsdrucks an beide Reaktorvorrichtungen 14, 14' gestartet. Während des Betriebs wird das Wärmeträgermedium des zweiten Teilkreislaufs 211' aus dem zweiten Eintritt 24 (über sowohl das Ventilmittel 26 als auch das Ventilmittel 27) zu den Reaktorvorrichtungen 14 und 14' geleitet. Dort nimmt das Wärmeträgermedium Wärme aus dem Reaktionsmaterial auf und wird dadurch erwärmt. Anschließend wird das Wärmeträgermedium über die Ventilmittel 28 und 29 dem zweiten Austritt 25 zugeführt. Der erste Teilkreislauf 211 ist nicht an die Reaktorvorrichtungen 14, 14' angeschlossen. Der Betriebsdruck und/oder der Massenstrom an Reaktionsgas kann über Druck- und/oder Durchflussregulierungsmittel, insbesondere das erste Druck-Ventilmittel 15, entsprechend der gewünschten Betriebstemperatur und/oder des gewünschten Leistungsprofils der Reaktorvorrichtungen 14, 14' angepasst werden.

Der "verstärkte" Betriebsmodus zur Wärme- bzw. Kälteerzeugung kann sowohl während der Fahrt als auch im Stand des Fahrzeuges durchgeführt werden. Je nach Jahreszeit können auch hier unterschiedliche Systeme 60 als Wärmequelle bzw. -senke dienen. Beispielsweise kann die Zuluft des Fahrzeuginnenraums im Sommer (mit Temperatur bis z. B. 45 °C) als Wärmequelle (zu kühlendes System 60) und im Winter (mit Temperaturen bis z. B. -15°) als Wärmesenke angeschlossen werden. Weitere/alternative Wärmesenken (zu erwärmende Systeme 60) können beispielsweise durch eine Brennstoffzellenanordnung (120 °C) und/oder ein Öl/Kühlwassersystem (Temperaturen 20 °C bis 90 °C) gebildet werden. Während der Fahrt kann von der Energiewandeleinrichtung 13 bereitgestellte Energie z. B. einem Antriebssystem, der elektrischen Energiespeichereinrichtung 19 und/oder anderen (Hilfs-) Aggregaten zugeführt werden.

Eine Effizienz steigernde Maßnahme insbesondere im kontinuierlichen Betrieb besteht in einer asynchronen Schaltung der Ventilmittel 26, 27 zu den Ventilmitteln 28, 29 bei dem Umschaltvorgang. Dabei werden nach jeweils einem Halbzyklus zunächst die Ventilmittel 26, 27 stromauf der Reaktorvorrichtungen 14, 14' umgeschaltet. Erst nach einer Umschaltzeit (Zeit zwischen den beiden Schaltvorgängen) werden die Ventilmittel 28, 29 stromab der Reaktorvorrichtungen 14' umgeschaltet. Die Umschaltzeit entspricht vorzugsweise zumindest der Durchstömzeit des Wärmeträgermediums eines zu durchströmenden Volumens der Reaktorvorrichtung, z. B. in etwa der Durchströmzeit des Wärmeträgermediums von den stromauf angeordneten Ventilmitteln 26, 27 zu den stromab angeordneten Ventilmitteln 28, 29. So ist die Umschaltzeit unter Kenntnis des Massen- bzw. Volumenstroms und des durchströmten Volumens der Reaktorvorrichtung bzw. zwischen den jeweiligen Ventilmitteln ermittelbar. Die Umschaltzeit kann, system- und betriebsabhängig, mehrere Sekunden, beispielsweise zwischen 5 s und 30 s betragen. Durch diese Maßnahme kann jeweils das restliche Volumen an Wärmeträgermedium, welches sich zwischen den stromauf angeordneten Ventilmitteln 26, 27 und den stromab angeordneten Ventilmittel 28, 29 befindet, in den entsprechenden Teilkreislauf 211, 211' abströmen. Erst nach dem Abströmen werden auch die stromab angeordneten Ventilmittel 28, 29 auf den anderen Teilkreislauf 211', 211 (oder umgekehrt) umgeschaltet. Durch die asynchrone Schaltung wird verhindert, dass ein Restvolumenstrom an kaltem bzw. warmem Wärmeträgermedium in den jeweils anderen Teilkreislauf 211', 211, d. h. den warmen bzw. kalten Teilkreislauf 211', 211 (oder umgekehrt) einströmt.

Während der Umschaltzeit wird vorzugsweise die Strömungsverbindung des Reaktionsgases von und/oder zu den Reaktorvorrichtungen 14, 14' unterbrochen. Die Energiewandeleinrichtung 13 kann, falls erforderlich, dabei über den Bypassabschnitt 122 mit Reaktionsgas versorgt werden. Somit kann verhindert werden, dass innerhalb der jeweiligen Reaktorvorrichtung 14, 14' aus einem bereits umgeschalteten Teilkreislauf 211', 211 nachströmendes warmes bzw. kaltes Wärmeträgermedium unerwünschter Weise mit Kälte bzw. Wärme beaufschlagt wird.

Fig. 2 zeigt ein Fließschema einer erfindungsgemäßen Thermoregulierungsanordnung 1, mit einer zusätzlich zu der Temperieranordnung 30 vorhandenen weiteren Temperieranordnung 31. Die Temperieranordnung 30 kann in einer nicht erfindungsgemäßen Ausführungsform auch anders als vorstehend beschrieben ausgebildet sein, wobei sie jedoch auf dem Prinzip der thermochemischen Reaktion (bzw. Sorption) Wärme und Kälte erzeugt und vorzugsweise als offenes System ausgebildet ist, d. h. eine Druckdifferenz zwischen der Reaktionsgasquelle und -senke als Triebkraft nutzt. Die weitere Temperieranordnung 31 ist erfindungsgemäß durch eine Kompressionskälteanordnung 32 gebildet. Die Kompressionskälteanordnung 32 wird durch die Energiewandeleinrichtung 13 unter Zwischenschaltung einer elektrischen Energiespeichereinrichtung 19 mit elektrischer Energie versorgt. Zu diesem Zweck sind zwischen der Energiewandeleinrichtung 13 und der Energiespeichereinrichtung 19 sowie zwischen der Energiespeichereinrichtung 19 und der weiteren Temperieranordnung 31 Leitungsmittel 50 (Fig. 2: gepunktete Linie) zur Leitung elektrischer Energie vorhanden. Die Energiewandeleinrichtung 13 ist in diesem Ausführungsbeispiel zur Bereitstellung elektrischer Energie ausgebildet, die zumindest teilweise in der Energiespeichereinrichtung 19 zwischengespeichert wird.

Die weitere Temperieranordnung 31 ist in thermischem Kontakt zu dem Wärmeträgermedium angeordnet, welches durch den ersten Teilkreislauf 211, hier beispielhaft der Kältekreislauf, strömt. Die weitere Temperieranordnung 31 ist dabei erfindungsgemäß strömungsmechanisch in Reihe, stromab der Temperieranordnung 30, in dem Teilkreislauf 211 angeordnet. Auf diese Weise erbringt die weitere Temperieranordnung 31 einen Teil der benötigten Kälteleistung bzw. der benötigten Temperaturänderung des Wärmeträgermediums in dem ersten Teilkreislauf 211. So kann beispielsweise das Wärmeträgermedium mit einer Temperatur T₁ von z. B. zwischen 50 °C und 30 °C, beispielsweise 40 °C, in den ersten Eintritt 22 in die Temperieranordnung 30 einströmen. Dort wird das Wärmeträgermedium beispielsweise auf eine Temperatur T₂ um 10 K abgekühlt. Anschließend strömt das Wärmeträgermedium mit der Temperatur T₂ in die weitere Temperieranordnung 31, wo es auf eine weitere, tiefere Temperatur T₃, z. B. um weitere z. B. 30 K abgekühlt wird. Anschließend wird das Wärmeträgermedium dem zu kühlenden System 60 zugeführt.

Untersuchungen der Erfinder haben gezeigt, dass sich durch die Kombination der Temperieranordnung 30 mit der weiteren Temperieranordnung 31 eine beträchtliche Wirkungsgradsteigerung der Thermoregulierungsanordnung 1 erzielen lässt. Dabei kann sowohl die Effizienz der Temperieranordnung 30 als auch die Effizienz der weiteren Temperieranordnung 31 verbessert werden. Dies gilt insbesondere bei der erfindungsgemäßen Anordnung in Reihe und wenn erfindungsgemäß die größere Temperaturdifferenz der Abkühlung des Wärmeträgermediums, zwischen 50 % und 100 %, z. B. zwischen 60 % und 80 %, durch die weitere Temperieranordnung 31 erbracht wird.

Insbesondere vorteilhaft ist die Kombination mit der weiteren Temperieranordnung 31 insbesondere in Anwendungen, die eine beträchtliche Kälteerzeugung erfordern, beispielsweise bei Transportern mit einem Kühlraum. Neben Straßenfahrzeugen können Schienen- und/oder Wasserfahrzeuge und/oder Container mit der Temperieranordnung 30, ggf. in Kombination mit der weiteren Temperieranordnung 31, ausgestattet sein.

## Patentansprüche

1. Verfahren zum Betreiben einer Thermoregulierungsanordnung (1) zur Temperierung eines mit der Thermoregulierungsanordnung (1) in thermischem Kontakt stehenden Systems (60), das insbesondere innerhalb eines Fahrzeugs angeordnet ist,
bei dem in einem Reaktionsgassystem (10) Reaktionsgas von einer Reaktionsgasquelle, insbesondere einer Speichereinrichtung (11), unter Zwischenschaltung einer Temperieranordnung (30) in eine Reaktionsgassenke, insbesondere eine Energiewandeleinrichtung (13), geleitet wird,
wobei in der in dem Reaktionsgassystem (10) angeordneten Temperieranordnung (30) in einem Absorptionsbetrieb Wärme und/oder in einem Desorptionsbetrieb Kälte erzeugt wird, wobei in dem Absorptionsbetrieb in einer ersten und/oder einer zweiten Reaktorvorrichtung (14, 14') Reaktionsgas von Reaktionsmaterial unter Wärmeabgabe absorbiert wird und in dem Desorptionsbetrieb in der zweiten und/oder der ersten Reaktorvorrichtung (14', 14) Reaktionsgas von dem Reaktionsmaterial unter Wärmeaufnahme desorbiert wird,
wobei ein Wärmeträgermedium, insbesondere ein Teilstrom des Wärmeträgermediums, innerhalb eines Wärmetransportsystems (20), insbesondere mittels einer Ventilanordnung, durch die erste und/oder die zweite Reaktorvorrichtung (14, 14') geleitet wird, wobei es zur Aufnahme der erzeugten Wärme oder Kälte in thermischen Kontakt mit dem ersten und/oder dem zweiten Reaktionsmaterial gebracht wird,
wobei in dem Absorptionsbetrieb und in dem Desorptionsbetrieb jeweils ein unterschiedlicher Betriebsdruck in den Reaktorvorrichtungen (14, 14') eingestellt wird und
wobei der jeweilige Betriebsdruck in den Reaktorvorrichtungen (14, 14') und/oder die Reaktionsgas-Massenströme zu bzw. von den Reaktorvorrichtungen (14, 14') in Abhängigkeit von Randbedingungen, insbesondere einer erforderlichen Temperatur des Wärmeträgermediums und/oder einer erforderlichen thermischen Leistung, eingestellt wird/werden,
**dadurch gekennzeichnet,**
**dass** ein Teil der thermischen Leistung zur Temperaturänderung, insbesondere zur Abkühlung, des Wärmeträgermediums durch eine als Kompressionskälteanordnung (32) ausgebildete weitere Temperieranordnung (31) erbracht wird, wobei insbesondere eine Abkühlung des Wärmeträgermediums bewirkt wird,
und **dass** das Wärmeträgermedium zunächst durch die Temperieranordnung (30) und anschließend durch die weitere Temperieranordnung (31) geleitet wird, wobei eine größere Temperaturdifferenz des Wärmeträgermediums, zwischen 50 % und 100 %, vorzugsweise zwischen 60 % und 80 %, durch die weitere Temperieranordnung (31) erbracht wird.

2. Verfahren nach Anspruch 1,
**dadurch gekennzeichnet,**
**dass** die Temperieranordnung (30) zumindest zeitweise zumindest von einem Teilstrom des Reaktionsgases über einen Bypassabschnitt (122) umströmt wird, wobei das Reaktionsgas unmittelbar von der Reaktionsgasquelle zu der Reaktionsgassenke strömt.

3. Verfahren nach einem der vorhergehenden Ansprüche,
**dadurch gekennzeichnet,**
**dass** die in dem Absorptionsbetrieb betriebene/n Reaktorvorrichtung/en (14, 14') von einem in einem ersten Teilkreislauf (211) geführten, wärmeaufnehmenden Teilstrom des Wärmeträgermediums und die in dem Desorptionsbetrieb betriebene/n Reaktorvorrichtung/en (14, 14') von einem in einem zweiten Teilkreislauf (211') geführten, kälteaufnehmenden Teilstrom des Wärmeträgermediums durchströmt werden, und/oder
**dass** in einem Halbzyklus eine der Reaktorvorrichtungen (14, 14') im Absorptionsbetrieb betrieben wird, wobei Reaktionsgas aus der Reaktionsgasquelle (11) zur Absorption in die jeweilige Reaktorvorrichtung (14, 14') geleitet wird und die abgegebene Wärme von dem Wärmeträgermedium aufgenommen wird, und die jeweils andere Reaktorvorrichtung (14', 14) im Desorptionsbetrieb betrieben wird, wobei Reaktionsgas aus der Reaktorvorrichtung (14', 14) in die Reaktionsgassenke geleitet wird, wobei Wärme aus dem Wärmeträgermedium aufgenommen und so das Wärmeträgermedium abgekühlt wird, wobei nach einer Halbzykluszeit in einem Umschaltvorgang die Strömungsverbindungen des Reaktionsgases und/oder des Wärmeträgermediums umgeschaltet werden und anschließend in dem anderen Halbzyklus die jeweils anderen Reaktorvorrichtungen (14', 14) im Absorptionsbetrieb und im Desorptionsbetrieb betrieben werden, wobei insbesondere der Umschaltvorgang in Abhängigkeit von Betriebsgrößen, z. B. eines Drucks und/oder einer Temperatur, eingeleitet wird.

4. Verfahren nach einem der vorhergehenden Ansprüche,
**dadurch gekennzeichnet,**
**dass** zunächst beide Reaktorvorrichtungen (14, 14'), vorzugsweise vollständig, von Reaktionsgas entladen sind, wobei anschließend Reaktionsgas parallel aus der Speichervorrichtung (11) in beide Reaktorvorrichtungen (14, 14') geleitet wird, die im Absorptionsbetrieb betrieben werden und Wärme an das Wärmeträgermedium abgeben oder
**dass** zunächst beide Reaktorvorrichtungen (14, 14'), vorzugsweise vollständig, mit Reaktionsgas beladen sind, wobei anschließend Reaktionsgas parallel aus beiden Reaktorvorrichtungen (14, 14'), die im Desorptionsbetrieb betrieben werden und Kälte an das Wärmeträgermedium abgeben, in die Reaktionsgassenke geleitet wird.

5. Verfahren nach Anspruch 3 oder 4,
**dadurch gekennzeichnet,**
**dass** bei dem Umschaltvorgang einzelne, in dem Wärmetransportsystem (20) vorhandene Ventilmittel (26, 27, 28, 29) der Ventilanordnung zumindest teilweise mit einer Umschaltzeit versetzt zueinander umgeschaltet werden.

6. Thermoregulierungsanordnung (1) zur Temperierung eines damit in thermischem Kontakt stehenden Systems (60) innerhalb eines Fahrzeugs, umfassend eine Steuereinrichtung, mit einem Reaktionsgassystem (10) umfassend
- eine Speichereinrichtung (11) für Reaktionsgas,
- eine Reaktionsgassenke zur chemischen Umsetzung des Reaktionsgases unter Energiefreisetzung,
- eine Temperieranordnung (30) zur Erzeugung von Wärme und/oder Kälte mit einer ersten Reaktorvorrichtung (14), die mit einem ersten Reaktionsmaterial gefüllt ist und einer zweiten Reaktorvorrichtung (14'), die mit einem zweiten Reaktionsmaterial gefüllt ist,
- Leitungsmittel (12) zur Strömungsverbindung zwischen der Reaktionsgasquelle, der Reaktionsgassenke und/oder den Reaktorvorrichtungen (14, 14') und
- eine Ventilanordnung zur Steuerung des Strömungswegs des Reaktionsgases über die Leitungsmittel (12)
und umfassend ein Wärmetransportsystem (20) mit Leitungsmitteln (21) zur Leitung von Wärmeträgermedium derart, dass das Wärmeträgermedium mit Reaktionsmaterial in zumindest einer der Reaktorvorrichtungen (14, 14') in thermischen Kontakt bringbar oder gebracht ist, wobei in dem Reaktionsgassystem (10) Mittel angeordnet sind, mittels derer der jeweilige Betriebsdruck in den Reaktorvorrichtungen (14, 14') und/oder die Reaktionsgas-Massenströme zu bzw. von den Reaktorvorrichtungen (14, 14') in Abhängigkeit von Randbedingungen einstellbar sind,
**dadurch gekennzeichnet,**
**dass** das Reaktionsgassystem (10) weiterhin eine durch eine Kompressionskälteanordnung (32) ausgebildete weitere Temperieranordnung (31) umfasst;
**dass** die Steuereinrichtung dazu ausgebildet und eingerichtet ist, ein Verfahren nach einem der Ansprüche 1 bis 5 durchzuführen; und
**dass** insbesondere der ersten und/oder der zweiten Reaktorvorrichtung (14, 14') zumindest ein Sensorelement (16, 16') zur Ermittlung des Betriebsdrucks zugeordnet ist.

7. Thermoregulierungsanordnung (1) nach Anspruch 6,
**dadurch gekennzeichnet,**
**dass** die Ventilanordnung derart ausgebildet ist, dass die erste und/oder die zweite Reaktorvorrichtung (14, 14') in Strömungsverbindung mit der Reaktionsgasquelle bringbar oder gebracht ist und/oder
**dass** die jeweils andere Reaktorvorrichtung (14', 14) in Strömungsverbindung mit der Reaktionsgassenke bringbar oder gebracht ist,
wobei die Strömungsverbindungen in einem Umschaltvorgang umschaltbar sind.

8. Thermoregulierungsanordnung (1) nach Anspruch 6 oder 7,
**dadurch gekennzeichnet,**
**dass** die Leitungsmittel (12) stromab der Reaktionsgasquelle, insbesondere stromab eines ersten Druck- und/oder Durchflussregulierungsmittels, in zumindest zwei parallele Teilleitungsstränge (121, 121') mit jeweils einem Ventilmittel (17, 17') der Ventilanordnung aufgeteilt sind, wobei die Teilleitungsstränge (121, 121') mittels der Ventilmittel (17, 17') mit jeweils einer der Reaktorvorrichtungen (14, 14') in Strömungsverbindung bringbar oder gebracht sind, und /oder
**dass** die Leitungsmittel (12) einen Bypassabschnitt (122) mit einem Bypassventilmittel (18) aufweisen, über welchen das Reaktionsgas unmittelbar, ohne Strömung über die Reaktorvorrichtung/en (14, 14'), zwischen der Reaktionsgasquelle und der Reaktionsgassenke strömen kann.

9. Thermoregulierungsanordnung (1) nach einem der Ansprüche 6 bis 8,
**dadurch gekennzeichnet,**
**dass** das Wärmetransportsystem (20) einen ersten Teilkreislauf (211) mit einem ersten Eintritt (22) und einem ersten Austritt (23) zur Strömungskopplung an eine erste Wärmequelle oder -senke aufweist und
einen zweiten Teilkreislauf (211') mit einem zweiten Eintritt (24) und einem zweiten Austritt (25) zur Strömungskopplung an eine zweite Wärmequelle oder -senke aufweist.

10. Thermoregulierungsanordnung (1) nach Anspruch 9,
**dadurch gekennzeichnet,**
**dass** mittels der Ventilanordnung der erste Teilkreislauf (211) mit der ersten Reaktorvorrichtung (14) und/oder mit der zweiten Reaktorvorrichtung (14') zur Wärmeübertragung in Strömungsverbindung bringbar oder gebracht ist und/oder
der zweite Teilkreislauf (211') mit der ersten Reaktorvorrichtung (14) und/oder mit der zweiten Reaktorvorrichtung (14') zur Wärmeübertragung in Strömungsverbindung bringbar oder gebracht ist, und
**dass** die Strömungsverbindungen in einem Umschaltvorgang umschaltbar sind.

11. Thermoregulierungsanordnung (1) nach einem der Ansprüche 6 bis 10,
**dadurch gekennzeichnet,**
**dass** das Reaktionsmaterial einen Feststoff aufweisend ein Metallhydrid, insbesondere eine Titan-Mangan-Legierung, umfasst und/oder
**dass** das Reaktionsgas durch Wasserstoff gebildet ist.

12. Thermoregulierungsanordnung (1) nach einem der Ansprüche 6 bis 11,
**dadurch gekennzeichnet,**
**dass** die Reaktionsgassenke mit einer Energiespeichereinrichtung (19), insbesondere zur Speicherung elektrischer Energie, elektrisch gekoppelt ist, und/oder
**dass** die Reaktorvorrichtungen (14, 14') jeweils einen Plattenwärmeübertrager umfassen, bei dem primäre Spaltkanäle zur Aufnahme von Reaktionsmaterial eine größere Spalthöhe aufweisen als sekundäre Spaltkanäle zur Durchströmung von Wärmeträgerfluid, wobei das Verhältnis der Spalthöhen der sekundären Spaltkanäle zu den Spalthöhen der primären Spaltkanäle zwischen 1:2 und 1:10, vorzugsweise zwischen 1:3 und 1:8, besonders bevorzugt zwischen 1:4 und 1:6, beträgt.

13. Fahrzeug mit einer Thermoregulierungsanordnung (1) nach einem der Ansprüche 6 bis 12 mit zumindest einem, vorzugsweise zumindest einem zu beheizenden und einem zu kühlenden, mit der Thermoregulierungsanordnung (1) in thermischem Kontakt stehenden zu temperierenden System (60).

## Claims

1. Method for operating a thermoregulation arrangement (1) for controlling the temperature of a system (60) which is in thermal contact with the thermoregulation arrangement (1) and is arranged in particular inside a vehicle,
in which method, in a reaction gas system (10), reaction gas is conducted from a reaction gas source, in particular a storage apparatus (11), into a reaction gas sink, in particular an energy conversion apparatus (13), which have a temperature control arrangement (30) connected therebetween,
heat being generated in an absorption mode and/or cold being generated in a desorption mode in the temperature control arrangement (30) arranged in the reaction gas system (10), reaction gas being absorbed by the reaction material in the absorption mode in a first and/or a second reactor device (14, 14'), causing heat release, and reaction gas being desorbed from the reaction material in the desorption mode in the second and/or the first reactor device (14', 14), causing heat absorption,
a heat carrier medium, in particular a partial flow of the heat carrier medium, being conducted through the first and/or the second reactor device (14, 14') within a heat transport system (20), in particular by means of a valve arrangement, the heat carrier medium being brought into thermal contact with the first and/or the second reaction material to absorb the generated heat or cold,
a different operating pressure being set in the reactor devices (14, 14') in the absorption operation and in the desorption operation and
the relevant operating pressure in the reactor devices (14, 14') and/or the reaction gas mass flows to or from the reactor devices (14, 14') being adjusted depending of boundary conditions, in particular a required temperature of the heat carrier medium and/or a required thermal output,
**characterized in that**
a part of the thermal output for changing the temperature of, in particular for cooling, the heat carrier medium is provided by a further temperature control arrangement (31) designed as a compression refrigeration arrangement (32), in particular a cooling of the heat carrier medium being effected, and **in that** the heat carrier medium is initially conducted through the temperature control arrangement (30) and then through the further temperature control arrangement (31), a greater temperature difference of the heat carrier medium, between 50% and 100%, preferably between 60% and 80%, being provided by the further temperature control arrangement (31).

2. Method according to claim 1,
**characterized in that**
at least a partial flow of the reaction gas at least temporarily flowing around the temperature control arrangement (30) via a bypass portion (122), the reaction gas flowing directly from the reaction gas source to the reaction gas sink.

3. Method according to any of the preceding claims,
**characterized in that**
a heat-absorbing partial flow, guided in a first partial circuit (211), of the heat carrier medium flows through the reactor device(s) (14, 14') operated in the absorption mode, and a cold-absorbing partial flow, guided in a second partial circuit (211'), of the heat carrier medium flows through the reactor device(s) (14, 14') operated in the desorption mode, and/or **in that** in a half-cycle, one of the reactor devices (14, 14') is operated in the absorption mode,
reaction gas from the reaction gas source (11) being conducted into the relevant reactor device (14, 14') for absorption and the released heat being absorbed by the heat carrier medium, and the other reactor device (14', 14) being operated in the desorption mode, reaction gas being conducted from the reactor device (14', 14) into the reaction gas sink, heat being absorbed from the heat carrier medium and the heat carrier medium thus being cooled, the flow connections of the reaction gas and/or the heat carrier medium being switched over in a switching process after a half-cycle time, and then in the other half-cycle, the other reactor devices (14', 14) being operated in the absorption mode and the desorption mode, the switching process in particular being initiated depending on operating variables, e.g. pressure and/or temperature.

4. Method according to any of the preceding claims,
**characterized in that**
initially, both reactor devices (14, 14') are discharged, preferably completely, of reaction gas, reaction gas then being conducted in parallel from the storage device (11) into both reactor devices (14, 14'), which are operated in the absorption mode and release heat to the heat carrier medium, or
**in that** initially, both reactor devices (14, 14') are loaded, preferably completely, with reaction gas, reaction gas then being conducted in parallel from both reactor devices (14, 14'), which are operated in the desorption mode and release cold to the heat carrier medium, into the reaction gas sink.

5. Method according to claim 3 or 4,
**characterized in that**
during the switching process, individual valve means (26, 27, 28, 29) of the valve arrangement present in the heat transport system (20) are at least partially switched over, offset from one another by a switching time.

6. Thermoregulation arrangement (1) for controlling the temperature of a system (60) in thermal contact therewith within a vehicle, the arrangement comprising a control apparatus and having a reaction gas system (10) comprising:
- a storage device (11) for reaction gas,
- a reaction gas sink for chemically converting the reaction gas, causing energy release,
- a temperature control arrangement (30) for generating heat and/or cold, having a first reactor device (14) filled with a first reaction material, and a second reactor device (14') filled with a second reaction material,
- conduit means (12) for a flow connection between the reaction gas source, the reaction gas sink and/or the reactor devices (14, 14'), and
- a valve arrangement for controlling the flow path of the reaction gas via the conduit means (12)
and comprising a heat transport system (20) having conduit means (21) for conducting heat carrier medium such that the heat carrier medium can be or is brought into thermal contact with reaction material in at least one of the reactor devices (14, 14'), means being arranged in the reaction gas system (10), by means of which the relevant operating pressure in the reactor devices (14, 14') and/or the reaction gas mass flows to or from the reactor devices (14, 14') can be adjusted depending on boundary conditions,
**characterized in that**
the reaction gas system (10) further comprises a further temperature control arrangement (31) formed by a compression refrigeration arrangement (32); **in that** the control apparatus is designed and configured to carry out a method according to any of claims 1 to 5; and
**in that** at least one sensor element (16, 16') for determining the operating pressure is assigned in particular to the first and/or the second reactor device (14, 14').

7. Thermoregulation arrangement (1) according to claim 6,
**characterized in that**
the valve arrangement is designed such that the first and/or the second reactor device (14, 14') can be or is brought into flow connection with the reaction gas source and/or
**in that** the other reactor device (14', 14) can be or is brought into flow connection with the reaction gas sink,
the flow connections being switchable in a switching process.

8. Thermoregulation arrangement (1) according to claim 6 or 7,
**characterized in that**
the conduit means (12), downstream of the reaction gas source, in particular downstream of a first pressure and/or flow regulating means, are divided into at least two parallel partial conduit strands (121, 121'), each comprising a valve means (17, 17') of the valve arrangement, the partial conduit strands (121, 121') each being able to be or being brought into flow connection with one of the reactor devices (14, 14') by means of the valve means (17, 17') , and/or
**in that** the conduit means (12) comprise a bypass portion (122) having a bypass valve means (18), via which bypass portion the reaction gas can flow directly between the reaction gas source and the reaction gas sink without flowing over the reactor device(s) (14, 14').

9. Thermoregulation arrangement (1) according to any of claims 6 to 8,
**characterized in that**
the heat transport system (20) comprises a first partial circuit (211) having a first inlet (22) and a first outlet (23) for flow coupling to a first heat source or heat sink, and
a second partial circuit (211') having a second inlet (24) and a second outlet (25) for flow coupling to a second heat source or heat sink.

10. Thermoregulation arrangement (1) according to claim 9,
**characterized in that**
by means of the valve arrangement, the first partial circuit (211) can be or is brought into flow connection with the first reactor device (14) and/or with the second reactor device (14') for heat exchange, and/or
the second partial circuit (211') can be or is brought into flow connection with the first reactor device (14) and/or with the second reactor device (14') for heat exchange, and
**in that** the flow connections are switchable in a switching process.

11. Thermoregulation arrangement (1) according to any of claims 6 to 10,
**characterized in that**
the reaction material comprises a solid having a metal hydride, in particular a titanium-manganese alloy, and/or
**in that** the reaction gas is formed by hydrogen.

12. Thermoregulation arrangement (1) according to any of claims 6 to 11,
**characterized in that**
the reaction gas sink is electrically coupled to an energy storage apparatus (19), in particular for storing electrical energy, and/or
**in that** the reactor devices (14, 14') each comprise a plate heat exchanger in which primary gap channels for receiving reaction material have a greater gap height than secondary gap channels for the throughflow of heat carrier fluid, the ratio of the gap heights of the secondary gap channels to the gap heights of the primary gap channels being between 1:2 and 1:10, preferably between 1:3 and 1:8, particularly preferably between 1:4 and 1:6.

13. Vehicle comprising a thermoregulation arrangement (1) according to any of claims 6 to 12, the vehicle having at least one system (60) to be temperature controlled, preferably at least one to be heated and one to be cooled, which is in thermal contact with the thermoregulation arrangement (1).

## Revendications

1. Procédé permettant de faire fonctionner un agencement de thermorégulation (1) destiné à la mise en température d'un système (60) en contact thermique avec l'agencement de thermorégulation (1), lequel système est disposé en particulier à l'intérieur d'un véhicule,
selon lequel, dans un système de gaz réactionnel (10), du gaz réactionnel est conduit depuis une source de gaz réactionnel, en particulier depuis un appareil de stockage (11), avec commutation intermédiaire de l'agencement de mise en température (30) dans un puits de gaz réactionnel, en particulier dans un appareil de conversion d'énergie (13),
dans lequel, dans l'agencement de mise en température (30) disposé dans le système de gaz réactionnel (10), de la chaleur est produite dans un mode d'absorption et/ou du froid est produit dans un mode de désorption, dans lequel, dans le mode d'absorption, du gaz réactionnel est absorbé par la matière réactionnelle dans un premier et/ou un second dispositif de réacteur (14, 14'), avec émission de chaleur et, dans le mode de désorption, du gaz réactionnel est désorbé de la matière réactionnelle dans le second et/ou le premier dispositif de réacteur (14', 14), avec absorption de chaleur,
dans lequel un fluide caloporteur, en particulier un courant partiel du fluide caloporteur, est conduit à l'intérieur d'un système de transport de chaleur (20), en particulier à l'aide d'un agencement de soupape, à travers le premier et/ou le second dispositif de réacteur (14, 14'), dans lequel le fluide caloporteur est mis en contact thermique avec la première et/ou la seconde matière réactionnelle pour l'absorption de la chaleur ou du froid produit,
dans lequel, dans le mode d'absorption et dans le mode de désorption, une pression de fonctionnement différente est respectivement réglée dans les dispositifs de réacteur (14, 14') et
dans lequel la pression de fonctionnement respective dans les dispositifs de réacteur (14, 14') et/ou les débits massiques de gaz réactionnel vers ou depuis les dispositifs réacteur (14, 14') est/sont réglés en fonction des conditions limites, en particulier d'une température requise du fluide caloporteur et/ou d'une puissance thermique requise,
**caractérisé en ce**
**qu'**une partie de la puissance thermique pour la modification de la température, en particulier pour le refroidissement, du fluide caloporteur est fournie par un autre agencement de mise en température (31) conçu comme un agencement de réfrigération par compression (32), dans lequel, en particulier, un refroidissement du fluide caloporteur est provoqué, et en ce que le fluide caloporteur est d'abord conduit à travers l'agencement de mise en température (30) et ensuite à travers l'autre agencement de mise en température (31), dans lequel une plus grande différence de température du fluide caloporteur, entre 50 % et 100 %, de préférence entre 60 % et 80 %, est fournie par l'autre agencement de mise en température (31).

2. Procédé selon la revendication 1,
caractérisé en ce
ce que l'agencement de mise en température (30) est contourné au moins temporairement par au moins un courant partiel du gaz réactionnel par l'intermédiaire d'une section de dérivation (122), dans lequel le gaz réactionnel s'écoule directement de la source de gaz réactionnel vers le puits de gaz réactionnel.

3. Procédé selon l'une des revendications précédentes,
**caractérisé en ce**
**que** le ou les dispositifs de réacteur (14, 14') fonctionnant en mode d'absorption sont traversés par un courant partiel du fluide caloporteur, lequel courant partiel absorbe la chaleur et est conduit dans un premier circuit partiel (211), et le ou les dispositifs de réacteur (14, 14') fonctionnant en mode de désorption sont traversés par un courant partiel du fluide caloporteur, lequel courant partiel absorbe le froid et est conduit dans un second circuit partiel (211'), et/ou
en ce que, dans un demi-cycle, l'un des dispositifs de réacteur (14, 14') fonctionne dans le mode d'absorption, dans lequel du gaz réactionnel est conduit depuis la source de gaz réactionnel (11) dans le dispositif de réacteur (14, 14') respectif pour l'absorption et la chaleur dégagée est absorbée par le fluide caloporteur, et l'autre dispositif de réacteur (14', 14) respectif fonctionne dans le mode de désorption, dans lequel du gaz réactionnel est conduit hors du dispositif de réacteur (14', 14) dans le puits de gaz réactionnel, dans lequel de la chaleur est absorbée hors du fluide caloporteur et le fluide caloporteur est ainsi refroidi, et dans lequel, après un temps de demi-cycle, les liaisons par écoulement du gaz réactionnel et/ou du fluide caloporteur sont commutées en une seule opération de commutation, puis, dans l'autre demi-cycle, les autres dispositifs de réacteur (14', 14) respectifs fonctionnent dans le mode d'absorption et dans le mode de désorption, dans lequel, en particulier, l'opération de commutation est initiée en fonction de grandeurs de fonctionnement, par exemple d'une pression et/ou d'une température.

4. Procédé selon l'une des revendications précédentes,
**caractérisé en ce**
**que** les deux dispositifs de réacteur (14, 14') sont d'abord déchargés, de préférence complètement, du gaz réactionnel, dans lequel du gaz réactionnel est ensuite conduit en parallèle depuis le dispositif de stockage (11) dans les deux dispositifs de réacteur (14, 14') qui fonctionnent en mode d'absorption et cèdent de la chaleur au fluide caloporteur ou
en ce que les deux dispositifs de réacteur (14, 14') sont d'abord chargés, de préférence complètement, avec du gaz réactionnel, dans lequel du gaz réactionnel est ensuite conduit en parallèle dans le puits de gaz réactionnel depuis les deux dispositifs de réacteur (14, 14') qui fonctionnent en mode de désorption et cèdent du froid au fluide caloporteur.

5. Procédé selon la revendication 3 ou 4,
**caractérisé en ce**
**que**, lors de l'opération de commutation, des moyens formant soupape (26, 27, 28, 29) individuels de l'agencement de soupape, lesquels moyens formant soupape sont présents dans le système de transport de chaleur (20), sont commutés au moins partiellement de manière décalée les uns par rapport aux autres avec un temps de commutation.

6. Agencement de thermorégulation (1) destiné à la mise en température d'un système (60) en contact thermique avec lui à l'intérieur d'un véhicule, comprenant un appareil de commande, comportant un système de gaz réactionnel (10) comprenant
- un appareil de stockage (11) pour le gaz réactionnel,
- un puits de gaz réactionnel destiné à la conversion chimique du gaz réactionnel avec libération d'énergie,
- un agencement de mise en température (30) destiné à la production de chaleur et/ou de froid à l'aide d'un premier dispositif de réacteur (14) qui est rempli d'une première matière réactionnelle et un second dispositif de réacteur (14') qui est rempli d'une seconde matière réactionnelle,
- des moyens formant conduite (12) pour la liaison par écoulement entre la source de gaz réactionnel, le puits de gaz réactionnel et/ou les dispositifs de réacteur (14, 14') et
- un agencement de soupape destiné à commander le trajet d'écoulement du gaz réactionnel par l'intermédiaire des moyens formant conduite (12)
et comprenant un système de transport de chaleur (20) comportant des moyens formant conduite (21) destinés à la conduite du fluide caloporteur de telle sorte que le fluide caloporteur peut être amené ou est amené en contact thermique avec la matière réactionnelle dans au moins un des dispositifs de réacteur (14, 14'), dans lequel des moyens sont disposés dans le système de gaz réactionnel (10), moyens à l'aide desquels la pression de fonctionnement respective dans les dispositifs de réacteur (14, 14') et/ou les débits massiques de gaz réactionnel vers ou depuis les dispositifs de réacteur (14, 14') sont réglables en fonction de conditions limites,
**caractérisé en ce**
**que** le système de gaz réactionnel (10) comprend en outre un autre agencement de mise en température (31) formé par un agencement de réfrigération par compression (32) ; en ce que l'appareil de commande est conçu et configuré pour exécuter un procédé selon l'une des revendications 1 à 5 ; et
en ce que, en particulier, au moins un élément de détection (16, 16') est associé au premier et/ou au second dispositif de réacteur (14, 14') pour la détermination de la pression de fonctionnement.

7. Agencement de thermorégulation (1) selon la revendication 6,
**caractérisé en ce**
**que** l'agencement de soupape est conçu de telle sorte que le premier et/ou le second dispositif de réacteur (14, 14') peut être amené ou est amené en liaison par écoulement avec la source de gaz réactionnel et/ou
en ce que l'autre dispositif de réacteur (14', 14) respectif peut être amené ou est amené en liaison par écoulement avec le puits de gaz réactionnel,
dans lequel les liaisons par écoulement peuvent être commutées en une seule opération de commutation.

8. Agencement de thermorégulation (1) selon la revendication 6 ou 7,
**caractérisé en ce**
**que** les moyens formant conduite (12) sont divisés en aval de la source de gaz réactionnel, en particulier en aval d'un premier moyen de régulation de pression et/ou de débit, en au moins deux tubulures partielles (121, 121') parallèles comportant respectivement un moyen de soupape (17, 17') de l'agencement de soupape, dans lequel les tubulures partielles (121, 121') peuvent être amenées ou étant amenées en liaison par écoulement à l'aide des moyens de soupape (17, 17') comportant respectivement des dispositifs de réacteur (14, 14'), et/ou
en ce que les moyens formant conduite (12) présentent une section de dérivation (122) comportant un moyen de soupape de dérivation (18) par l'intermédiaire duquel le gaz réactionnel peut s'écouler directement, sans écoulement par l'intermédiaire du ou des dispositifs de réacteur (14, 14'), entre la source de gaz réactionnel et le puits de gaz réactionnel.

9. Agencement de thermorégulation (1) selon l'une des revendications 6 à 8,
**caractérisé en ce**
**que** le système de transport de chaleur (20) présente un premier circuit partiel (211) comportant une première entrée (22) et une première sortie (23) pour le couplage par écoulement à une première source ou un premier puits de chaleur et
présente un second circuit partiel (211') comportant une seconde entrée (24) et une seconde sortie (25) pour le couplage par écoulement à une seconde source ou à un second puits de chaleur.

10. Agencement de thermorégulation (1) selon la revendication 9,
**caractérisé en ce**
**que**, à l'aide du dispositif de soupape, le premier circuit partiel (211) peut être mis ou est mis en liaison par écoulement avec le premier dispositif de réacteur (14) et/ou avec le second dispositif de réacteur (14') pour le transfert de chaleur et/ou
le second circuit partiel (211') peut être mis ou est mis en liaison par écoulement avec le premier dispositif de réacteur (14) et/ou avec le second dispositif de réacteur (14') pour le transfert de chaleur, et
en ce que les liaisons par écoulement peuvent être commutées en une seule opération de commutation.

11. Agencement de thermorégulation (1) selon l'une des revendications 6 à 10,
**caractérisé en ce**
**que** la matière réactionnelle comprend une matière solide présentant un hydrure métallique, en particulier un alliage titane-manganèse, et/ou
en ce que le gaz réactionnel est formé d'hydrogène.

12. Agencement de thermorégulation (1) selon l'une des revendications 6 à 11,
**caractérisé en ce**
**que** le puits de gaz réactionnel est couplé électriquement à un appareil de stockage d'énergie (19), en particulier pour le stockage d'énergie électrique, et/ou
en ce que les dispositifs de réacteur (14, 14') comprennent respectivement un échangeur de chaleur à plaques, dont des canaux en fente primaires destinés à recevoir de la matière réactionnelle présentent une hauteur de fente plus grande que celle des canaux en fente secondaires destinés à être traversés par un fluide caloporteur, dans lequel le rapport entre les hauteurs de fente des canaux en fente secondaires et les hauteurs de fente des canaux en fente primaires sont compris entre 1:2 et 1:10, de préférence entre 1:3 et 1:8, de manière particulièrement préférée entre 1:4 et 1:6.

13. Véhicule comportant un agencement de thermorégulation (1) selon l'une des revendications 6 à 12, comportant au moins un système (60), de préférence au moins un système à chauffer et un système à refroidir en contact thermique avec l'agencement de thermorégulation (1).
